(19) Europäisches Patentamt
European Patent Office
Office européen des brevets

(11) **EP 4 622 373 A1**

(12) **EUROPEAN PATENT APPLICATION**
published in accordance with Art. 153(4) EPC

(43) Date of publication:
24.09.2025 Bulletin 2025/39

(21) Application number: 23891131.7

(22) Date of filing: 31.08.2023

(51) International Patent Classification (IPC):
H04W 72/0453 (2023.01)    H04W 4/021 (2018.01)
H04W 4/029 (2018.01)    H04W 4/30 (2018.01)
H04W 16/14 (2009.01)    H04W 64/00 (2009.01)

(52) Cooperative Patent Classification (CPC):
H04W 4/021; H04W 4/029; H04W 4/30;
H04W 16/14; H04W 64/00; H04W 72/0453

(86) International application number:
PCT/JP2023/031719

(87) International publication number:
WO 2024/105972 (23.05.2024 Gazette 2024/21)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 18.11.2022 JP 2022185300
02.12.2022 JP 2022193788

(71) Applicant: Sony Group Corporation
Tokyo 108-0075 (JP)

(72) Inventor: FURUICHI Sho
Tokyo 108-0075 (JP)

(74) Representative: Witte, Weller & Partner
Patentanwälte mbB
Postfach 10 54 62
70047 Stuttgart (DE)

(54) **INFORMATION PROCESSING DEVICE AND INFORMATION PROCESSING METHOD**

(57) An information processing device and an information processing method capable of appropriately determining a spectrum to be used by a communication device are provided.

An information processing device of the present disclosure includes a processing unit that determines whether or not a communication device exists in a first region on the basis of first information related to a position of the communication device, and generates second information that specifies the first region as a region where it is possible that the communication device exists in a case where it is determined that the communication device exists in the first region, and a communication unit that transmits the second information to the communication device or a proxy that is communicable with a control system that allocates a spectrum available to the communication device on the basis of the region where it is possible that the communication device exists.

*FIG. 8*

**Description**

TECHNICAL FIELD

The present disclosure relates to an information processing device and an information processing method.

BACKGROUND ART

Hitherto, due to increase in a wireless environment in which various wireless systems are mixed and an enrichment of content provided wirelessly, a problem of exhaustion of radio resources (spectrum) that can be allocated to the wireless systems has emerged. Accordingly, as a means for extracting necessary radio resources, "dynamic spectrum sharing (dynamic spectrum access (DSA))" using temporal and spatial vacancies (white spaces) in a frequency band allocated to a specific wireless system has rapidly attracted attention.

The United States Federal Communications Commission (FCC) and Canada's Ministry of Innovation, Science, and Economic Development (ISED: Innovation, Science and Economic Development) permit high-power output and outdoor use of unlicensed devices (Wi-Fi, 5G NR-U, and the like) using the Automated Frequency Coordination (AFC) system for the 6 GHz band. Such an unlicensed device is referred to as a standard power device (SPD). By using the SPD capable of high output indoors, the expandability of SPD use is expanded.

In order to use the SPD, it is necessary to determine an available spectrum, transmission power, and the like of the SPD in consideration of interference with the primary system to be protected on the basis of position information and the like of the SPD in the AFC system. However, in a case where the accuracy of the position information of the SPD is low and it is determined by the AFC system that the SPD exists in a region different from a region where the SPD may actually exist, the use of the recognized spectrum may not be recognized in the region where the SPD may actually exist. Furthermore, only transmission power lower than the transmission power allowed in the region may be allowed. For example, in a case where it is determined that the region where the SPD may exist spans both indoor and outdoor even though the region is actually indoor, the available spectrum and transmission power are determined in accordance with the outdoor position where the spectrum use is most restricted, and the use of the spectrum and transmission power that are allowed in the case of only indoor is not allowed. Furthermore, as another example, in a case where it is determined that the SPD may exist in a region across a plurality of adjacent countries where the laws related to the installation of the AFC system are different, it is difficult to determine whether to permit the SPD to use the spectrum and how to determine the spectrum available for the SPD in a case where the SPD is permitted.

CITATION LIST

NON-PATENT DOCUMENT

Non-Patent Document 1: Electronic Code of Federal Regulations, Title 47, Chapter I, Subchapter A, Part 1, Subpart X Spectrum Leasing [available at https://ecfr.federalregister.gov/current/title-47/chapter-I/subchapter-D/part-96]
Non-Patent Document 2: WINNF-TS-0061-V1.5.1 Test and Certification for Citizens Broadband Radio Service (CBRS); Conformance and Performance Test Technical Specification; SAS as Unit Under Test (UUT) [available at https://cbrs.wirelessinnovation.org/release-1-of-the-baseline-standard-specifications]
Non-Patent Document 3: WINNF-TS-0016-V1.2.4 Signaling Protocols and Procedures for Citizens Broadband Radio Service (CBRS): Spectrum Access System (SAS) - Citizens Broadband Radio Service Device (CBSD) Interface Technical Specification [available at https://cbrs.wirelessinnovation.org/release-1-of-the-baseline-standard-specifi cations]
Non-Patent Document 4: 940660 D02 CBSD Handshake Procedures v02 [available at https://apps.fcc.gov/kdb/ GetAttachment.html?id=RQe7oZJVSW       t0fCcNiBV%2Bfw%3D%3D&desc=940660%20D02%20CPE-CBSD% 20Handshake%20Procedures%20v02&tracking_number=22929 7]
Non-Patent Document 5: 47 CFR Part 15 Subpart E Unlicensed National Information Infrastructure Devices [available at https://www.ecfr.gov/current/title-47/chapter-I/subchapter-A/part-15/subpart-E]
Non-Patent Document 6: Decision on the Technical and Policy Framework for Licence-Exempt Use in the 6 GHz Band, available at https://www.ic.gc.ca/eic/site/smt-gst.nsf/eng/sf11698.html
Non-Patent Document 7: Wi-Fi EasyMesh, available at: https://www.wi-fi.org/discover-wi-fi/wi-fi-easymesh
Non-Patent Document 8: Wi-Fi Alliance AFC Specification and Test Plans, available at: https://www.wi-fi.org/down loads-registered-guest/AFC_Specifications_and_Test_Plans_072022.zip/38132
Non-Patent Document 9: Wireless Innovation Forum Specifications, Reports and Recommendations, available at:

https://6ghz.wirelessinnovation.org/specifications-reports-and-recommendations
Non-Patent Document 10: WINNF-TS-3005-V1.1.0 Signaling Protocols and Procedures for 6 GHz Band; Extensions to AFC System - Standard Power Device Interface Technical Specification, available at:https://6ghz.wirelessinnovation.org/specifications-reports-and-recommendations

SUMMARY OF THE INVENTION

PROBLEMS TO BE SOLVED BY THE INVENTION

The present disclosure provides an information processing device and an information processing method capable of appropriately determining a spectrum to be used by a communication device.

SOLUTIONS TO PROBLEMS

An information processing device of the present disclosure includes a processing unit that determines whether or not a communication device exists in a first region on the basis of first information related to a position of the communication device, and generates second information that specifies the first region as a region where it is possible that the communication device exists in a case where it is determined that the communication device exists in the first region, and a communication unit that transmits the second information to the communication device or a proxy that is communicable with a control system that allocates a spectrum available to the communication device on the basis of the region where it is possible that the communication device exists.

An information processing method according to the present disclosure includes determining whether or not a communication device exists in a first region on the basis of first information related to a position of the communication device, and generating second information that specifies the first region as a region where it is possible that the communication device exists in a case where it is determined that the communication device exists in the first region, and transmitting the second information to the communication device or a proxy that is communicable with a control system that allocates a spectrum available to the communication device on the basis of the region where it is possible that the communication device exists.

BRIEF DESCRIPTION OF DRAWINGS

Fig. 1 is a diagram illustrating a system model in an embodiment of the present disclosure.
Fig. 2 is a diagram illustrating a network configuration to which autonomous decision-making can be applied.
Fig. 3 is a diagram illustrating a network configuration to which centralized decision-making can be applied.
Fig. 4 is a diagram illustrating a network configuration in a case where both centralized decision-making and distributed decision-making are applied.
Fig. 5 is a diagram for describing a three-tier structure in CBRS.
Fig. 6 is a diagram for describing a flow of signaling between terminals.
Fig. 7 is a diagram illustrating a protocol interface (excerpted from WINNF-TS-3005-V1.1.0).
Fig. 8 is a block diagram of a communication system according to a first embodiment.
Fig. 9 is a block diagram illustrating a configuration example of an information processing device according to the first embodiment.
Fig. 10 is a diagram illustrating an example of map data including a building B1 and SPD of a contractor.
Fig. 11 is a view illustrating an outer peripheral line of a building.
Fig. 12 is a diagram illustrating, by hatching, a region in which a building region and a region indicated by first position range information overlap.
Fig. 13 is a diagram illustrating a region surrounded by an outer peripheral line of a building by oblique lines.
Fig. 14 is a diagram illustrating an operation example of a communication system according to the first embodiment.
Fig. 15 is a diagram illustrating another operation example of the communication system according to the first embodiment.
Fig. 16 is a diagram illustrating another operation example of the communication system according to the first embodiment.
Fig. 17 is a diagram illustrating target frequency bands of AFC systems in the United States and Canada.
Fig. 18 is a diagram illustrating an example in which an XYZ company operates an AFC system only in a country A.
Fig. 19 is a diagram illustrating an example in which an XYZ company operates an AFC system only in a country B.
Fig. 20 is a diagram illustrating an example in which an XYZ company operates an AFC system in both a country A and a country B.

Fig. 21 is a block diagram of an AFC system as an example of an information processing device according to a second embodiment.

Fig. 22 is a diagram illustrating an example of an operation mode of operating one AFC system commonly installed for both two countries.

Fig. 23 is a diagram illustrating a configuration example of the AFC system in a case where the operation mode of Fig. 22 is assumed.

Fig. 24 is a diagram illustrating an example of an overall system configuration in a case where the operation mode of Fig. 22 is assumed.

Fig. 25 is a diagram illustrating an overall system configuration example in a case where independent AFC systems are arranged in two adjacent countries.

Fig. 26 is a block diagram of an example of the first AFC system and the second AFC system illustrated in Fig. 25.

Fig. 27 is a diagram illustrating an example of dividing a region extending over two countries on the basis of a border line.

MODE FOR CARRYING OUT THE INVENTION

Hereinafter, embodiments of the present disclosure will be described in detail with reference to the drawings. In one or more embodiments described in the present disclosure, elements included in each of the embodiments can be combined with each other, and the combined resultant also forms part of the embodiments described in the present disclosure.

<<1. Assumed Representative Scenario>>

<1.1 System model>

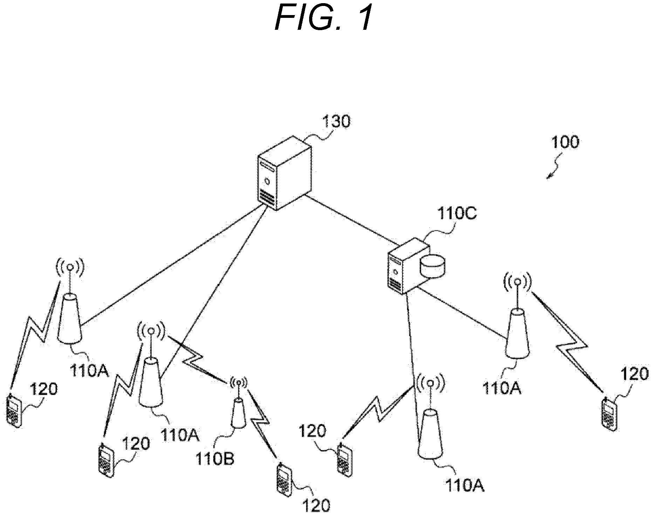

Fig. 1 illustrates a system model in an embodiment of the present invention. As illustrated in Fig. 1, this system model is represented by a communication network 100 including wireless communication, and typically includes the following entities.

- Communication device 110
- Terminal 120
- Communication control device 130

Furthermore, this system model includes at least a primary system and a secondary system using the communication network 100. The primary system and the secondary system are configured by the communication device 110 or the communication device 110 and the terminal 120. Various communication systems can be treated as the primary system or the secondary system, but in the present embodiment, it is assumed that the primary system and the secondary system each use some or all of a frequency band. Note that the respective frequency bands allocated to the primary system and the secondary system may partially or entirely overlap or may not overlap at all. That is, this system model will be described as a model of a wireless communication system related to dynamic spectrum sharing (dynamic spectrum access (DSA)). Note that this system model is not limited to systems related to dynamic spectrum sharing.

Typically, the communication device 110 is a wireless device that provides a wireless communication service to the terminal 120, such as a wireless base station (Base Station, Node B, eNB, gNB, or the like) or a wireless access point. That is, the communication device 110 provides the wireless communication service to enable wireless communication of the terminal 120. Furthermore, the communication device 110 may be a wireless relay device or an optical extension device called a Remote Radio Head (RRH). In the following description, unless otherwise noted, the communication device 110 will be described as an entity constituting the secondary system.

The coverage (communication region) provided by the communication device 110 is allowed to have various sizes from a large size such as a macro cell to a small size such as a pico cell. Like a distributed antenna system (DAS), a plurality of the communication devices 110 may form one cell. Furthermore, in a case where the communication device 110 has a capability of beamforming, a cell or a service area may be formed for each beam.

In the present disclosure, it is assumed that there are two different types of communication devices 110.

In the present disclosure, the communication device 110 that can access the communication control device 130 without using a wireless path that requires permission of the communication control device 130 is referred to as a "communication device 110A". Specifically, for example, the communication device 110 capable of a wired Internet connection can be regarded as the "communication device 110A". Furthermore, for example, even in a wireless relay device that does not have a wired Internet connection function, if a wireless backhaul link using a spectrum that does not require permission of the communication control device 130 is constructed with another communication device 110A, such a wireless relay device may also be regarded as the "communication device 110A".

In the present disclosure, the communication device 110 that cannot access the communication control device 130 without a wireless path that requires permission of the communication control device 130 is referred to as a "communication device 110B". For example, a wireless relay device that needs to construct a backhaul link using a spectrum that requires permission of the communication control device 130 can be regarded as a "communication device 110B". Furthermore, for example, a device such as a smartphone having a wireless network provision function represented by tethering and using a spectrum that requires permission of the communication control device 130 in both the backhaul link and the access link may be treated as the "communication device 110B".

The communication device 110 is not necessarily fixedly installed. For example, the communication device 110 may be installed in a mobile object such as an automobile. Furthermore, the communication device 110 does not necessarily need to exist on the ground. For example, the communication device 110 may be included in an object existing in the air or space, such as an aircraft, a drone, a helicopter, a high altitude platform station (HAPS), a balloon, or a satellite. Furthermore, for example, the communication device 110 may be included in an object existing on the sea or under the sea, such as a ship or a submarine. Typically, such a mobile communication device 110 corresponds to the communication device 110B, and performs wireless communication with the communication device 110A to secure an access path to the communication control device 130. As a matter of course, even the mobile communication device 110 can be treated as the communication device 110A as long as the spectrum used in the wireless communication with the communication device 110A is not managed by the communication control device 130.

In the present disclosure, unless otherwise specified, the description "communication device 110" includes both meanings of the communication device 110A and the communication device 110B, and may be replaced with either one.

The communication device 110 can be used, operated, or managed by various operators. For example, a mobile network operator (MNO), a mobile virtual network operator (MVNO), a mobile network enabler (MNE), a mobile virtual network enabler (MVNE), a shared facility operator, a neutral host network (NHN) operator, a broadcaster, an enterprise, an educational institution (educational institutions, respective boards of education of local governments, or the like), a real estate (building, apartment, or the like) administrator, an individual, and the like can be assumed as operators related to the communication device 110. Note that the operator related to the communication device 110 is not particularly limited. Furthermore, the communication device 110A may be a shared facility used by a plurality of operators. Furthermore, different operators may perform installation, use, and management of the facilities.

The communication device 110 operated by the operator is typically connected to the Internet via a core network. Furthermore, operation, management, and maintenance are performed by a function called Operation, Administration & Maintenance (OA&M). Furthermore, for example, as illustrated in Fig. 1, there may be an intermediate device (network manager) 110C that centrally controls the communication devices 110 in the network. Note that there may be cases where the intermediate device is the communication device 110 or cases where the intermediate device is the communication control device 130.

The terminal 120 (User Equipment, User Terminal, User Station, Mobile Terminal, Mobile Station, or the like) is a device that performs wireless communication using a wireless communication service provided by the communication device 110. Typically, communication equipment such as a smartphone corresponds to the terminal 120. Note that a device having a wireless communication function can correspond to the terminal 120. For example, equipment such as a business camera having a wireless communication function can also correspond to the terminal 120 even if the wireless communication is not a main application. Furthermore, communication equipment that transmits data to the terminal 120, such as a wireless station for broadcasting business (field pickup unit (FPU)) that transmits an image for television broadcasting or the like from an outside (site) of a broadcast station to the broadcast station in order to broadcast sports or the like, also corresponds to the terminal 120. Furthermore, the terminal 120 is not necessarily used by a person. For example, like what is called machine type communication (MTC), equipment such as a factory machine or a sensor installed in a building may be network-connected to operate as the terminal 120. Furthermore, a device called customer premises equipment (CPE) provided to ensure connection to the Internet may behave as the terminal 120.

Furthermore, as represented by device-to-device (D2D) and vehicle-to-everything (V2X), the terminal 120 may include a relay communication function.

Furthermore, similarly to the communication device 110, the terminal 120 need not be fixedly installed or exist on the ground. For example, an object existing in the air or space, such as an aircraft, a drone, a helicopter, a satellite, or the like, may operate as the terminal 120. Furthermore, for example, an object existing on the sea or under the sea, such as a ship or a submarine, may operate as the terminal 120.

In the present disclosure, unless otherwise noted, the terminal 120 corresponds to an entity where a wireless link using a spectrum that requires permission of the communication control device 130 terminates. However, depending on a function included in the terminal 120 or an applied network topology, the terminal 120 can perform an operation equivalent to that of the communication device 110. In other words, depending on the network topology, there may be cases where a device that can correspond to the communication device 110 such as a wireless access point corresponds to the terminal 120, or cases where a device that can correspond to the terminal 120 such as a smartphone corresponds to the communication device 110.

The communication control device 130 is typically a device that determines, permits, gives an instruction on, and/or manages communication parameters of the communication device 110. For example, database servers called TV white space database (TVWSDB), geolocation database (GLDB), spectrum access system (SAS), and automated frequency coordination (AFC) correspond to the communication control device 130. In other words, a database server having an authority and a role such as authentication and supervision of radio wave use related to secondary use of a spectrum can be regarded as the communication control device 130.

The communication control device 130 also corresponds to a database server having a role different from the above-described role. For example, a control device that performs radio wave interference control between communication devices represented by a Spectrum Manager (SM) in EN 303 387 of the European Telecommunications Standards Institute (ETSI), a Coexistence Manager (CM) in the Institute of Electrical and Electronics Engineers (IEEE) 802.19.1-2018, a Coexistence Manager (CxM) in CBRSA-TS-2001, or the like also corresponds to the communication control device 130. Furthermore, for example, a registered location secure server (RLSS) defined in IEEE 802.11-2016 also corresponds to the communication control device 130. That is, not limited to these examples, an entity responsible for determination, use permission, instruction, management, and the like of the communication parameters of the communication device 110 may be referred to as the communication control device 130. Basically, the control target of the communication control device 130 is the communication device 110, but the communication control device 130 may control the terminal 120 subordinate to the communication device 110.

The communication control device 130 also corresponds to a combination of a plurality of database servers having different roles. For example, CBRS Alliance SAS (CSAS) which is a combination of SAS and CxM illustrated in CBRSA-TS-2001 can also be regarded as the communication control device 130.

The communication control device 130 can also be implemented by software having a function equivalent to that of the database server installed on one database server. For example, a SAS having a function or software equivalent to CxM can also be regarded as the communication control device 130.

There may be a plurality of communication control devices 130 having similar roles. In a case where there is the plurality of communication control devices 130 having similar roles, at least one of the following three types of decision-making topologies can be applied to the communication control device 130.

- Autonomous decision-making
- Centralized decision-making
- Distributed decision-making

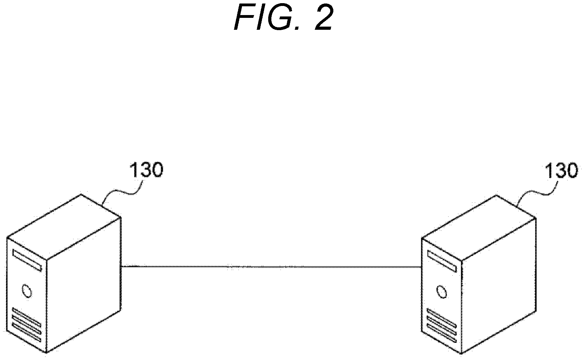

The autonomous decision-making is a decision-making topology in which an entity (the decision-making entity, here the communication control device 130) that makes a decision makes a decision independently from another decision-making entity. The communication control device 130 independently calculates necessary spectrum allocation and interference control. For example, in a case where a plurality of communication control devices 130 is arranged in a distributed manner as illustrated in Fig. 2, the autonomous decision-making can be applied.

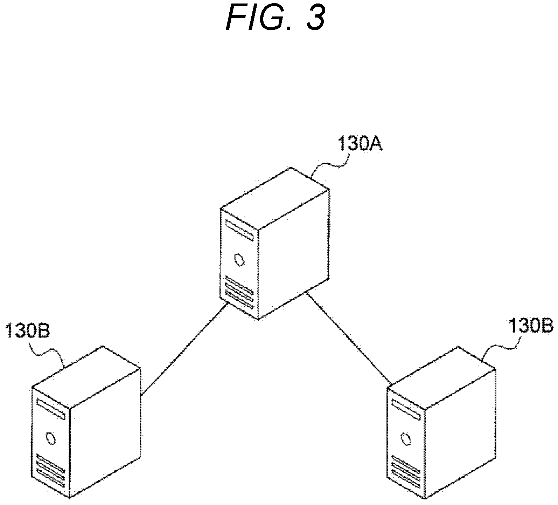

The centralized decision-making is a decision-making topology in which a decision-making entity delegates decision-making to another decision-making entity. In a case where the centralized decision-making is performed, for example, a model as illustrated in Fig. 3 can be assumed. Fig. 3 illustrates a model (what is called master-slave type) in which one communication control device 130 performs centralized control of the plurality of communication control devices 130. In the model of Fig. 3, the communication control device 130A, which is the master, can control the communication control devices 130B, which are a plurality of slaves, to intensively make decisions.

The distributed decision-making is a decision-making topology in which a decision-making entity makes a decision in cooperation with another decision-making entity. For example, while a plurality of communication control devices 130 independently makes a decision as in the autonomous decision-making in Fig. 2, mutual adjustment of decision-making results, negotiation, and the like performed by each communication control device 130 after making a decision may correspond to "distributed decision-making". Furthermore, for example, in the centralized decision-making in Fig. 3, for the purpose of load balancing or the like, performing dynamic delegation of decision-making authority to each slave communication control device 130B, deletion thereof, or the like by the master communication control device 130A can also be regarded as "distributed decision-making".

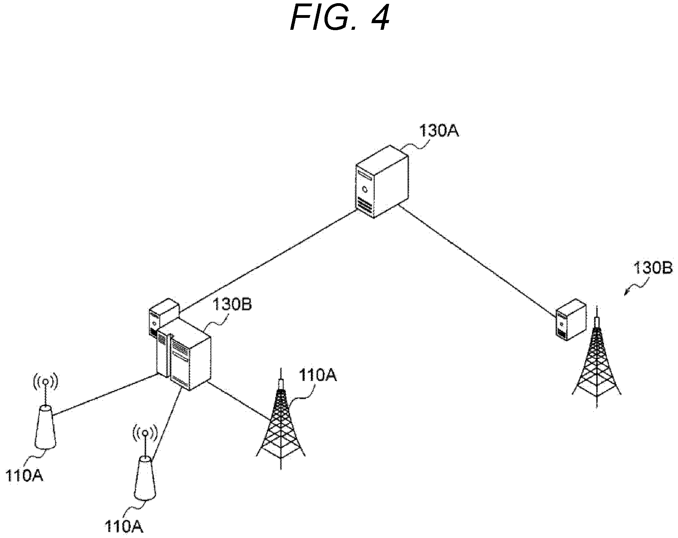

There may be cases where both the centralized decision-making and the distributed decision-making are applied. In Fig. 4, the slave communication control device 130B operates as an intermediate device that bundles the plurality of communication devices 110. It is not necessary for the master communication control device 130A to control the communication devices 110 bundled by the slave communication control device 130B, that is, the secondary system configured by the slave communication control device 130B. As described above, as a modification, implementation as illustrated in Fig. 4 is also possible.

The communication control device 130 may also acquire necessary information from entities other than the communication device 110 and the terminal 120 of the communication network 100 for its role. Specifically, for example, information necessary for protecting the primary system can be acquired from a database (regulatory database) managed or operated by a radio administration agency (national regulatory authority (NRA)) of a country or a region. Examples of the regulatory database include the Universal Licensing System (ULS) operated by the Federal Communications Commissions (FCC), and the like. Examples of information necessary for protecting the primary system include, for example, position information of the primary system, communication parameters of the primary system, an out-of-band emission (OOBE) limit, an adjacent channel leakage ratio (ACLR), adjacent channel selectivity, a fading margin, a protection ratio (PR), and the like. In a region where a fixed numerical value, an acquisition method, a derivation method, and the like are defined by a law or the like in order to protect the primary system, it is desirable to use information defined by the law as information necessary for protecting the primary system.

Furthermore, a database that records the communication device 110 and the terminal 120 that have been subjected to conformity authentication, such as an equipment authorization system (EAS) managed by the Office of Engineering and Technology (OET) of the FCC, also corresponds to the regulatory database. From such a regulatory database, it is possible to acquire information regarding an operable spectrum of the communication device 110 or the terminal 120, information regarding maximum equivalent isotropic radiated power (EIRP), and the like. Naturally, the communication control device 130 may use these pieces of information for protecting the primary system.

Furthermore, it can also be assumed that the communication control device 130 acquires radio wave sensing information from a radio wave sensing system installed and operated for the purpose of radio wave detection in the primary system. As a specific example, in citizens broadband radio service (CBRS) in the United States, the communication control device 130 acquires radio wave detection information of a ship radar as a primary system from a radio wave sensing system called an environmental sensing capability (ESC). Furthermore, in a case where the communication device 110 and the terminal 120 have a sensing function, the communication control device 130 may acquire radio wave detection information of the primary system from these.

Furthermore, it can also be assumed that the communication control device 130 acquires activity information of the primary system from a portal system that manages the activity information of the primary system. As a specific example, in citizens broadband radio service (CBRS) in the United States, the communication control device 130 acquires the activity information of the primary system from a calendar-type system called Informing Incumbent Portal. Protection of the primary system is achieved by enabling a protection area called Dynamic Protection Area (DPA) on the basis of the acquired activity information. Protection of the primary system is also implemented by an equivalent system called Informing Incumbent Capability (IIC) in a similar manner.

The interface between the respective entities constituting this system model may be wired or wireless. For example, not only a wired line but also a wireless interface that does not depend on spectrum sharing may be used as an interface between the communication control device 130 and the communication device 110. Examples of the wireless interface that does not depend on spectrum sharing include, for example, a wireless communication line provided by a mobile network operator via a licensed band, Wi-Fi communication using an existing license-exempt band, and the like.

<1.2 Terms related to spectrum and sharing>

As described above, the present embodiment will be described assuming a dynamic spectrum sharing (Dynamic Spectrum Access) environment. As a representative example of the dynamic spectrum sharing, a mechanism defined by the CBRS in the United States (that is, a mechanism defined in Part 96 Citizens Broadband Radio Service of the FCC Rules of the United States) will be described.

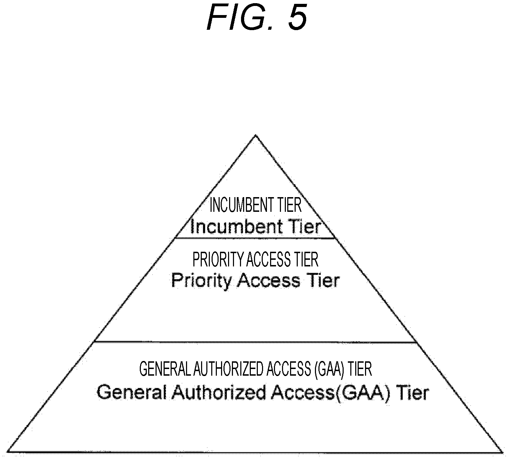

In the CBRS, as illustrated in Fig. 5, each of users in the frequency band is classified into one of three groups. This group is referred to as a tier. The three groups are referred to as an Incumbent Tier, a Priority Access Tier, and a General Authorized Access (GAA) Tier, respectively.

The Incumbent Tier is a group including existing users who conventionally use frequency bands. The existing user is also generally referred to as a primary user. In the CBRS, the Department of Defense (DOD), fixed satellite operators, and new rule excepted radio broadband licensees (Grandfathered Wireless Broadband Licensees (GWBL)) in the United States are defined as existing users. The Incumbent Tier is not required to avoid interference to the Priority Access Tier and the GAA Tier with lower priorities or to suppress use of the frequency band. Furthermore, the Incumbent Tier is protected from interference by the Priority Access Tier and the GAA Tier. That is, users of the Incumbent Tier can use the frequency band without considering the existence of other groups.

The Priority Access Tier is a group including users who use the frequency band on the basis of the above-described priority access license (PAL). A user of the Priority Access Tier is also generally referred to as a secondary user. When the frequency band is used, the Priority Access Tier is required to avoid interference and to suppress use of the frequency band for the Incumbent Tier having a higher priority than the Priority Access Tier. On the other hand, neither avoiding interference nor suppressing use of the frequency band is required for the GAA Tier having a lower priority than the priority access tier. Furthermore, the Priority Access Tier is not protected from interference by the Incumbent Tier with a higher priority, but is protected from interference by the GAA Tier with a lower priority.

The GAA Tier is a group including frequency band users that do not belong to the Incumbent Tier and the Priority Access Tier. Similarly to the Priority Access Tier, in general, a user of the GAA Tier is also referred to as a secondary user. However, since the priority of shared use is lower than that of the Priority Access Tier, it is also referred to as a low priority secondary user. When the frequency band is used, the GAA Tier is required to avoid interference and suppress use of the frequency band for the Incumbent Tier and the Priority Access Tier having higher priorities. Furthermore, the GAA Tier is not protected from interference by the Incumbent Tier and Priority Access Tier with higher priority.

Although the CBRS mechanism has been described above as a representative example of the dynamic spectrum sharing, the present embodiment is not limited to the definition of CBRS. For example, as illustrated in Fig. 5, the CBRS generally employs a three-tier structure, but a two-tier structure may be employed in the present embodiment. Representative examples of the two-tier structure include Authorized Shared Access (ASA), Licensed Shared Access (LSA), evolved LSAs (eLSAs), TV band white space (TVWS), US 6 GHz band sharing, and the like. In the ASA, the LSA, and the eLSA, there is no GAA Tier, and a structure equivalent to a combination of the Incumbent Tier and the Priority Access Tier is employed. Furthermore, in the TVWS and the US 6 GHz band sharing, there is no Priority Access Tier, and a structure equivalent to a combination of the Incumbent Tier and the GAA Tier is employed. Furthermore, there may be four or more tiers. Specifically, for example, four or more tiers may be generated by providing a plurality of intermediate layers corresponding to the Priority Access Tiers and giving different priorities to the respective intermediate layers, and the like. Furthermore, for example, the tiers may be increased by similarly dividing the GAA Tier and giving priorities, and the like. That is, each group may be divided.

Furthermore, the primary system of the present embodiment is not limited to the definition of CBRS. For example, as an example of the primary system, a wireless system such as TV broadcasting, a fixed microwave line (fixed system (FS)), a meteorological radar, a radio altimeter, a wireless train control system (communications-based train control), and a radio astronomy are assumed. Furthermore, the present embodiment is not limited thereto, and any wireless system can be the primary system of the present embodiment.

Furthermore, as described above, the present embodiment is not limited to the environment of spectrum sharing. In general, in spectrum sharing or spectrum secondary use, an existing system that uses a target frequency band is referred to as a primary system, and a secondary user is referred to as a secondary system. However, in a case where the present embodiment is applied to an environment other than the spectrum sharing environment, they should be read by replacing with other terms. For example, a macro cell base station in a heterogeneous network (HetNet) may be the primary system, and a small cell base station or a relay station may be the secondary system. Furthermore, the base station may be the primary system, and a relay user equipment (Relay UE) or a Vehicle UE that implements D2D or V2X existing within its coverage may be the secondary system. The base station is not limited to a fixed type, and may be a portable type or a mobile type. In such a case, for example, the communication control device 130 of the present embodiment may be included in a core network, a base station, a relay station, a Relay UE, or the like.

Furthermore, in a case where the present embodiment is applied to an environment other than the spectrum sharing environment, the term "spectrum" in the present disclosure is replaced with another term shared by the application destination. For example, terms such as "resource", "resource block", "resource element", "resource pool", "channel", "component carrier", "carrier", "subcarrier", "bandwidth part (BWP)", and "frequency range", or another term having a meaning equivalent or similar thereto are assumed to be used.

<<1. Description of various procedures assumed in present embodiment>>

Here, a basic procedure that can be used in the implementation of the present embodiment will be described. Note that up to <2.5> described later will be described on the assumption that the processing is mainly performed in the communication device 110A.

<2.1 Registration procedure>

A registration procedure is a procedure for registering information of a wireless system that intends to use the frequency band. More specifically, it is a procedure for registering device parameters related to the communication device 110 of the wireless system in the communication control device 130. Typically, the registration procedure is started by that the communication device 110 representing a wireless system that intends to use the frequency band notifies the communication control device 130 of a registration request including the device parameters. Note that, in a case where a plurality of the communication devices 110 belongs to the wireless system that intends to use the frequency band, the device parameters of each of the plurality of communication devices is included in the registration request. Furthermore, a device that transmits the registration request as a representative of the wireless system may be appropriately determined.

<2.1.1 Details of required parameters>

The device parameter refers to, for example, the following information.

- Information regarding a user of the communication device 110 (hereinafter described as user information)
- Information unique to the communication device 110 (hereinafter described as unique information)
- Information regarding a position of the communication device 110 (hereinafter described as position information)
- Information regarding an antenna included in the communication device 110 (hereinafter described as antenna information)
- Information regarding the wireless interface included in the communication device 110 (hereinafter described as wireless interface information)
- Legal information regarding the communication device 110 (hereinafter described as legal information)
- Information regarding an installer of the communication device 110 (hereinafter described as installer information)
- Information regarding the group to which the communication device 110 belongs (hereinafter, group information)

The device parameter is not limited to the above. Information other than these may be treated as the device parameters. Note that the device parameters do not need to be transmitted at once, and may be transmitted in a divided manner a plurality of times. That is, a plurality of registration requests may be transmitted for one registration procedure. In this manner, one procedure or one processing in the procedure may be performed a plurality of times. This similarly applies to the procedure described below.

The user information is information related to the user of the communication device 110. For example, a user ID, an account name, a user name, a user contact address, a call sign, and the like can be assumed. The user ID and the account name may be independently generated by the user of the communication device 110 or may be issued in advance by the communication control device 130. As the call sign, it is desirable to use a call sign issued by the NRA.

The user information can be used, for example, in an application of interference resolution. As a specific example, in a spectrum use notification procedure described in <2.5> to be described later, even if the communication control device 130 makes the use stop determination on the spectrum being used by the communication device 110 and gives an instruction based on the use stop determination, there may be a case where notification of a spectrum use notification request of the spectrum is continuously provided. In this case, suspecting a failure of the communication device 110, the communication control device 130 can give a behavior check request for the communication device 110 to the user contact address included in the user information. Not limited to this example, in a case where it is determined that the communication device 110 is performing an operation against communication control performed by the communication control device 130, the communication control device 130 can make a contact using the user information.

The unique information is information that can specify the communication device 110, product information of the communication device 110, information regarding hardware or software of the communication device 110, and the like.

The information that can specify the communication device 110 can include, for example, a manufacturing number (serial number) of the communication device 110, an ID of the communication device 110, and the like. The ID of the communication device 110 may be uniquely given by the user of the communication device 110, for example.

The product information of the communication device 110 can include, for example, information regarding an authentication ID, a product model number, a manufacturer, and the like. The authentication ID is, for example, an ID given from a certificate authority in each country or region, such as an FCC ID in the United States, a CE number in Europe, and a technical standards conformity certification (technical conformity) in Japan. An ID issued by an industry association or the like on the basis of a unique authentication program may also be regarded as the authentication ID.

The unique information represented by these may be used, for example, for a permission list (allowlist) or a denial list (denylist). For example, in a case where any piece of information regarding the communication device 110 in operation is included in the denial list, the communication control device 130 can instruct the communication device 110 to stop using the spectrum in the spectrum use notification procedure described in <2.5> described later. Moreover, the communication control device 130 can take a behavior of not canceling the use stop measure until the communication device 110 is cancelled from the denial list. Furthermore, for example, the communication control device 130 can reject registration of the communication device 110 included in the denial list. Furthermore, for example, the communication control device 130 can also perform an operation that does not consider the communication device 110 corresponding to the information included in the denial list in the interference calculation of the present disclosure or that considers only the communication device 110 corresponding to the information included in the permission list in the interference calculation.

Note that, in the present disclosure, the FCC ID may be used as information regarding transmission power. For example, in an equipment authorization system (EAS) database, which is a type of regulatory database, information regarding a device for which authentication has been acquired can be acquired, and an application programming interface (API) thereof is also disclosed. For example, certified maximum EIRP information or the like can be included in the information together with the FCC ID. Since such power information is associated with the FCC ID, the FCC ID can be handled as transmission power information. Similarly, the FCC ID may be treated as equivalent to other information included in the EAS. Furthermore, not limited to the FCC ID, in a case where information associated with the authentication ID is present, the authentication ID may be treated as equivalent to the information.

The information regarding the hardware of the communication device 110 can include, for example, transmission power class information. For example, in Title 47 Code of Federal Regulations (C.F.R) Part 96 in the United States, two types of classes Category A and Category B are defined as the transmission power class information, and information regarding the hardware of the communication device 110 conforming to the definition can include information regarding which of the two types of classes it belongs to. Furthermore, in TS36.104 and TS38.104 of 3rd Generation Partnership Project (3GPP), some classes of eNodeB and gNodeB are defined, and these definitions can also be used.

The transmission power class information can be used, for example, in an application of interference calculation. The interference calculation can be performed using the maximum transmission power defined for each class as the transmission power of the communication device 110.

The information regarding the software of the communication device 110 can include, for example, version information, a build number, and the like regarding an execution program in which processing necessary for interaction with the communication control device 130 is described. Furthermore, version information, a build number, and the like of software for operating as the communication device 110 may also be included.

The position information is typically information that can specify the position of the communication device 110. For example, it is coordinate information acquired by a positioning function represented by the Global Positioning System (GPS), Beidou, the Quasi-Zenith Satellite System (QZSS), Galileo, or the Assisted Global Positioning System (A-GPS). Typically, information related to latitude, longitude, ground level or sea level, altitude, and positioning error can be included. Alternatively, for example, the position information may be position information registered in an information management device managed by the National Regulatory Authority (NRA) or its entrusted institution. Alternatively, for example, coordinates of an X axis, a Y axis, and a Z axis with a specific geographical position as an origin may be used. Furthermore, together with such coordinate information, an identifier indicating whether the communication device 110 exists outdoors or indoors can be given.

Furthermore, the position information may include positioning accuracy information (location uncertainty). For example, both or one of a horizontal plane and a vertical plane may be provided as the positioning accuracy information. For example, the positioning accuracy information (location uncertainty) can be used as a correction value when calculating a distance to any point. Furthermore, for example, the positioning accuracy information can also be used as region information in which the communication device 110 is likely to be located. In this case, it is used for processing of specifying spectrum information that can be used in the region indicated by the positioning accuracy information.

Furthermore, the position information may be information indicating a region in which the communication device 110 is located. For example, information indicating a region determined by the government, such as a postal code or an address, may be used. Furthermore, for example, the region may be indicated by a set of three or more geographic coordinates. These pieces of information indicating the region may be provided together with the coordinate information.

Furthermore, in a case where the communication device 110 is located indoors, information indicating the floor of a building where the communication device 110 is located can also be included in the position information. For example, an identifier indicating the number of floors, the ground, or the underground, or the like can be included in the position information. Furthermore, for example, information indicating a further closed space inside a building, such as a room number and a room name in the building, can be included in the position information.

Typically, the positioning function is desirably included in the communication device 110. However, there may be cases where performance of the positioning function does not satisfy the required accuracy. Furthermore, even if the performance of the positioning function satisfies the required accuracy, there may be a case where it is not always possible to acquire the position information that satisfies the required accuracy depending on an installation position of the communication device 110. Therefore, a device different from the communication device 110 may include the positioning function, and the communication device 110 may acquire information related to the position from the device. The device having the positioning function may be an available existing device, or may be provided by the installer of the communication device 110. In such a case, it is desirable that the position information measured by the installer of the communication device 110 is written in the communication device 110.

The antenna information is typically information indicating performance, a configuration, and the like of an antenna included in the communication device 110. Typically, for example, information such as an antenna installation height, a tilt angle (downtilt), a horizontal orientation (azimuth), a boresight, an antenna peak gain, and an antenna model can be included.

Furthermore, the antenna information can also include information regarding a formable beam. For example, information such as a beam width, a beam pattern, and an analog or digital beamforming capability can be included.

Furthermore, the antenna information can also include information regarding performance and configuration of multiple input multiple output (MIMO) communication. For example, information such as the number of antenna elements and the maximum number of spatial streams (or the number of MIMO layers) can be included. Furthermore, codebook information to be used, weight matrix information, and the like can also be included. The weight matrix information includes a unitary matrix, a zero-forcing (ZF) matrix, a minimum mean square error (MMSE) matrix, and the like, which are obtained by singular value decomposition (SVD), eigen value decomposition (EVD), block diagonalization (BD), and the like. Furthermore, in a case where the communication device 110 includes a function such as maximum likelihood detection (MLD) that requires nonlinear calculation, information indicating the included function may be included in the antenna information.

Furthermore, the antenna information may include a zenith of direction, departure (ZoD). The ZoD is a type of radio wave arrival angle. Note that instead of being provided in notification from the communication device 110, the ZoD may be estimated and provided in notification by another communication device 110 from radio waves radiated from the antenna of the communication device 110. In this case, the communication device 110 may be a device that operates as a base station or an access point, a device that performs D2D communication, a moving relay base station, or the like. The ZoD may be estimated by a radio wave direction of arrival estimation technology such as multiple signal classification (MUSIC) or estimation of signal propagation via rotation invariance techniques (ESPRIT). Furthermore, the ZoD can be used by the communication control device 130 as measurement information.

The wireless interface information is typically information indicating a wireless interface technology included in the communication device 110. For example, identifier information indicating a technology used in GSM, CDMA2000, UMTS, E-UTRA, E-UTRA NB-IoT, 5G NR, 5G NR NB-IoT or a further next generation cellular system can be included as the wireless interface information. Furthermore, identifier information indicating a derivative technology based on Long Term Evolution (LTE)/5G such as MulteFire, Long Term Evolution-Unlicensed (LTE-U), or NR-Unlicensed (NR-U) can be included. Furthermore, identifier information indicating a standard technology such as a metropolitan area network (MAN) such as WiMAX or WiMAX2+ or a wireless LAN of the IEEE 802.11 series can also be included. Furthermore, identifier information indicating an extended global platform (XGP) or a shared XGP (sXGP) may be used. It may be identifier information of a communications technology for local power, wide area (LPWA). Furthermore, identifier information indicating a proprietary wireless technology can also be included. Furthermore, a version number or a release number of the technical specification that defines these technologies may also be included as the wireless interface information.

Furthermore, the wireless interface information can also include frequency band information supported by the communication device 110. For example, the frequency band information can be represented by an upper limit frequency, a lower limit frequency, a center frequency, a bandwidth, a 3GPP operating band number, or a combination of at least two of these, or the like. Furthermore, one or more pieces of frequency band information can be included in the wireless interface information.

The frequency band information supported by the communication device 110 can further include information indicating capability of a band extension technology such as carrier aggregation (CA) or channel bonding. For example, combinable band information or the like can be included. Furthermore, the carrier aggregation can also include information regarding a band desired to be used as a primary component carrier (PCC) or a secondary component carrier (SCC). Furthermore, the number of component carriers (the number of CCs) that can be aggregated at the same time can be included.

The frequency band information supported by the communication device 110 may further include information indicating a combination of frequency bands supported by the dual connectivity and the multi connectivity. Furthermore, information of another communication device 110 that cooperatively provides the dual connectivity and the multi connectivity may also be provided. The communication control device 130 may perform determination of the communication control disclosed in the present embodiment in consideration of another communication device 110 having a cooperative relationship or the like in subsequent procedures.

The frequency band information supported by the communication device 110 may also include information indicating radio wave usage priority such as PAL and GAA.

Furthermore, the wireless interface information can also include modulation scheme information supported by the communication device 110. For example, as a representative example, information indicating a primary modulation scheme such as frequency shift keying (FSK), n-value phase shift keying (PSK, where n is a multiplier of two, such as two, four, eight, or the like), and n-value quadrature amplitude modulation (QAM, where n is a multiplier of four, such as four, sixteen, 64, 256, 1024) can be included. Furthermore, information indicating a secondary modulation scheme such as orthogonal frequency division multiplexing (OFDM), scalable OFDM, DFT spread OFDM (DFT-s-OFDM), generalized frequency division multiplexing (GFDM), and filter bank multi carrier (FBMC) can be included.

Furthermore, the wireless interface information can also include information regarding an error correction code. For example, capabilities of a turbo code, a low density parity check (LDPC) code, a polar code, an erasure correction code, and the like, and coding rate information to be applied can be included.

The modulation scheme information and the information regarding the error correction code can also be expressed by a modulation and coding scheme (MCS) index as another aspect.

Furthermore, the wireless interface information can also include information indicating a function specific to each wireless technical specification supported by the communication device 110. For example, as a representative example, there is transmission mode (TM) information defined in LTE. Furthermore, those having two or more modes for a specific function can be included in the wireless interface information such as TM information. Furthermore, in the technical specification, in a case where the communication device 110 supports a function that is not essential in the specification even if there are not two or more modes, information indicating the supported function can also be included.

Furthermore, the wireless interface information can also include radio access technology (RAT) information supported by the communication device 110. For example, information indicating time division multiple access (TDMA), frequency division multiple access (FDMA), orthogonal frequency division multiple access (OFDMA), power division multiple access (PDMA), code division multiple access (CDMA), sparse code multiple access (SCMA), interleave division multiple access (IDMA), spatial division multiple access (SDMA), carrier sense multiple access/collision avoidance (CSMA/CA), carrier sense multiple access/collision detection (CSMA/CD), or the like can be included. Note that the TDMA, FDMA, and OFDMA are classified into orthogonal multiple access (OMA). The PDMA, CDMA, SCMA, IDMA, and SDMA are classified into non orthogonal multiple access (NOMA). A representative example of the PDMA is a technique implemented by a combination of superposition coding (SPC) and successive interference canceller (SIC). The CSMA/CA and CSMA/CD are classified into opportunistic access.

In a case where the wireless interface information includes information indicating the opportunistic access, information indicating details of the access method may be further included. As a specific example, information indicating which of frame based equipment (FBE) and load based equipment (LBE) defined in EN 301 598 of ETSI may be included.

In a case where the radio interface information indicates the LBE, the wireless interface information may further include LBE-specific information such as a priority class.

Furthermore, the wireless interface information can also include information regarding a duplex mode supported by the communication device 110. As a representative example, information regarding a method such as frequency division duplex (FDD), time division duplex (TDD), or full duplex (FD) can be included for example.

In a case where TDD is included as the wireless interface information, TDD frame structure information used or supported by the communication device 110 can be given. Furthermore, information related to the duplex mode may be included for each frequency band indicated by the frequency band information.

In a case where the FD is included as the wireless interface information, information regarding an interference power detection level may be included.

Furthermore, the wireless interface information can also include information regarding a transmission diversity method supported by the communication device 110. For example, space time coding (STC) or the like may be included.

Furthermore, the wireless interface information can also include guard band information. For example, information regarding a predetermined guard band size in the wireless interface can be included. Alternatively, for example, information regarding a guard band size desired by the communication device 110 may be included.

Regardless of the aspects described above, the wireless interface information may be provided for each frequency band.

The legal information is typically information regarding regulations that the communication device 110 has to comply with and defined by the radio administration agency or an equivalent agency in each country or region, authentication information acquired by the communication device 110, or the like. Typically, the information regarding the regulations can include, for example, upper limit value information of out-of-band emission, information regarding a blocking characteristic of the receiver, and the like. Typically, the authentication information can include, for example, type approval information, legal regulation information serving as an authentication acquisition criterion, and the like. The type approval information corresponds to, for example, FCC ID in the United States, the technical standards conformity certification in Japan, and the like. The legal regulation information corresponds to, for example, FCC regulation numbers in the United States, ETSI Harmonized Standard number in Europe, and the like.

Among the legal information, regarding numerical values, those defined in the standard specification of wireless interface technology may be substituted. The standard specification of the wireless interface technology corresponds to, for example, 3GPP TS36.104, TS38.104, or the like. An adjacent channel leakage ratio (ACLR) is defined therein. Instead of the upper limit information of the out-of-band emission, the upper limit of the out-of-band emission may be derived and used using the ACLR defined in the standard specification. Furthermore, the ACLR itself may be used as necessary. Furthermore, adjacent channel selectivity (ACS) may be used instead of the blocking characteristic. Furthermore, these may be used in combination, or an adjacent channel interference ratio (ACIR) may be used. Note that, in general, the ACIR has the following relationship with the ACLR and ACS.

[Math. 1]

$$ACIR = \left( \frac{1}{ACS} + \frac{1}{ACLR} \right)^{1} \quad (1)$$

Note that although Expression (1) uses true value expression, Expression (1) may be expressed by logarithmic expression.

The installer information can include information capable of specifying a person who installs the communication device 110 (installer), unique information associated with the installer, and the like. Typically, the installer information can include information regarding a person who is responsible for the position information of the communication device 110, such as a certified professional installer (CPI) defined in Non-Patent Document 1. The CPI discloses certified professional installer registration ID (CPIR-ID) and CPI name. Furthermore, as unique information associated with the CPI, for example, a contact address (mailing address or contact address), an e-mail address, a telephone number, a public key identifier (PKI), and the like are disclosed. It is not limited thereto, and other information related to the installer may be included in the installer information as necessary.

The group information can include information regarding the communication device group to which the communication device 110 belongs. Specifically, for example, information related to the same or equivalent type of group as disclosed in WINNF-SSC-0010 can be included. Furthermore, for example, in a case where the communication operator manages the communication devices 110 in units of groups according to its own operation policy, information regarding the groups can be included in the group information.

The information listed so far may be estimated by the communication control device 130 from other information provided from the communication device 110 without the communication device 110 providing the information to the communication control device 130. Specifically, for example, the guard band information can be estimated from the wireless interface information. In a case where the wireless interface used by the communication device 110 is E-UTRA or 5G NR, it can be estimated on the basis of the transmission bandwidth specification of E-UTRA described in 3GPP TS36.104, the transmission bandwidth specification of 5G NR described in 3GPP TS38.104, and tables described in TS38.104 illustrated below.

[Table 1]

| Table 5.6-1 Transmission bandwidth configuration NRB in E-UTRA channel bandwidths (Cited from Table 5.6-1 in TS36.104 of 3GPP) | | | | | | |
|---|---|---|---|---|---|---|
| Channel bandwi dth BW$_{Channel}$ [MHz] | 1.4 | 3 | 5 | 10 | 15 | 20 |
| Transmission bandwidth configuration $N_{RB}$ | 6 | 15 | 25 | 50 | 75 | 100 |

[Table 2]

| Table 5.3.3-1: Minimum guardband (kHz) (FR1) (Cited from Table 5.3.3-1 in TS38.104 of 3GPP) | | | | | | | | | | | | | |
|---|---|---|---|---|---|---|---|---|---|---|---|---|---|
| SCS (kHz) | 5 MHz | 10 MHz | 15 MHz | 20 MHz | 25 MHz | 30 MHz | 40 MHz | 50 MHz | 60 MHz | 70 MHz | 80 MHz | 90 MHz | 100 MHz |
| 15 | 242. 5 | 312. 5 | 382. 5 | 452.5 | 522.5 | 592.5 | 552. 5 | 692. 5 | N.A | N. A | N. A | N.A | N.A |
| 30 | 505 | 665 | 645 | 805 | 785 | 945 | 905 | 1045 | 825 | 965 | 925 | 885 | 845 |
| 60 | N. A | 1010 | 990 | 1330 | 1310 | 1290 | 1610 | 1570 | 1530 | 1190 | 1450 | 1410 | 1370 |

[Table 3]

| Table: 5.3.3-2: Minimum guardband (kHz) (FR2) (Cited from Table 5.3.3-2 in TS38.104 of 3GPP) | | | | |
|---|---|---|---|---|
| SCS (kHz) | 50 MHz | 100 MHz | 200 MHz | 400 MHz |
| 60 | 1210 | 2150 | 4930 | N.A |
| 120 | 1900 | 2420 | 4900 | 9860 |

[Table 4]

| Table: 5.3.3-3: Minimum guardband (kHz) of SCS 240 kHz SS/PBCH block (FR2) (Cited from Table 5.3.3-3 in TS38.104 of 3GPP) | | | |
|---|---|---|---|
| SCS (kHz) | 100 MHz | 200 MHz | 400 MHz |
| 240 | 3800 | 7720 | 15560 |

In other words, it is sufficient that the communication control device 130 can acquire the information listed so far, and the communication device 110 is not necessarily required to provide the information to the communication control device 130. Furthermore, the intermediate device 130B (for example, a network manager) that bundles the plurality of communication devices 110 does not need to provide the information to the communication control device 130A. Providing information by the communication device 110 or the intermediate device 130B to the communication control device 130 or 130A is merely one means of information provision in the present embodiment. The information listed so far means information that can be necessary for the communication control device 130 to normally complete this procedure, and means for providing the information does not matter. For example, in WINNF-TS-0061, such a method is called multi-step registration and allowed.

Furthermore, as a matter of course, the information listed so far is selectively applicable depending on the local legal system and technical specifications.

<2.1.1.1 Supplement of Required Parameters>

In the registration procedure, in some cases, it is assumed that the device parameters related to not only the communication device 110 but also the terminal 120 are required to be registered in the communication control device 130. In such cases, the term "communication device" in the description given in <2.1.1> may be replaced with a term "terminal" or a similar term. Furthermore, parameters specific to "terminal", not described in <2.1.1>, may also be treated as required parameters in the registration procedure. For example, there is a user equipment (UE) category defined in 3GPP, and the like.

<2.1.2 Details of Registration Processing>

As described above, the communication device 110) representing the wireless system that intends to use the frequency band generates a registration request including the device parameter and notifies the communication control device 130 of the registration request.

Here, in a case where the installer information is included in the device parameters, the communication device 110 may perform tamper-proof processing or the like on the registration request by using the installer information. Furthermore, a part or all of the information included in the registration request may be subjected to encryption processing. Specifically, for example, a unique public key may be shared in advance between the communication device 110 and the communication control device 130, and the communication device 110 may encrypt information using a secret key corresponding to the public key. Examples of the encryption target include security sensitive information such as position information.

Note that there may be cases where the ID and the position information of the communication device 110 are disclosed, and the communication control device 130 holds in advance the ID and the position information of the main communication device 110 existing in its coverage. In such a case, since the communication control device 130 can acquire the position information from the ID of the communication device 110 that has transmitted the registration request, the position information does not need to be included in the registration request. Furthermore, it is also conceivable that the communication control device 130 returns necessary device parameters to the communication device 110 that has transmitted the registration request, and in response to this, the communication device 110 transmits a registration request including the device parameters necessary for registration. In this manner, the information included in the registration request may be different depending on the case.

After receiving the registration request, the communication control device 130 performs registration processing of the communication device 110 and returns a registration response according to a processing result. If there is no shortage or abnormality of information necessary for registration, the communication control device 130 records the information in an internal or external storage device and provides notification of normal completion. Otherwise, notification of a registration failure is provided. In a case where the registration is normally completed, the communication control device 130 may allocate an ID to each of the communication devices 110 and provide notification of such ID information at the time of response. In a case where the registration fails, the communication device 110 may provide notification of a revised registration request again. Furthermore, the communication device 110 may change the registration request and try the registration procedure until the normal completion.

Note that the registration procedure is sometimes executed even after the registration is normally completed. Specifically, for example, the registration procedure can be re-executed in a case where the position information is changed beyond a predetermined criterion due to movement, accuracy improvement, or the like. The predetermined criterion is typically determined by the legal system in each country or region. For example, in 47 C.F.R. Part 15 in the United States, a Mode II personal/portable white space device, that is, a device using a free spectrum is required to perform registration again in a case where its position changes by 100 meters or more.

<2.2 Available spectrum information query procedure (available spectrum query procedure)>

The available spectrum information query procedure is a procedure in which a wireless system that intends to use a frequency band inquires of the communication control device 130 for information regarding an available spectrum. Note that the available spectrum information query procedure does not necessarily need to be performed. Furthermore, the communication device 110 that makes an inquiry on behalf of the wireless system that intends to use the frequency band may be the same as or different from the communication device 110 that has generated the registration request. Typically, the communication device 110 that makes an inquiry notifies the communication control device 130 of a query request including information that can specify the communication device 110, and thereby the procedure is started.

Here, typically, the available spectrum information is information indicating a spectrum in which the communication device 110 can safely perform secondary use without giving fatal interference to the primary system.

The available spectrum information is determined, for example, on the basis of a secondary use prohibited area called an exclusion zone. Specifically, for example, in a case where the communication device 110 is installed in the secondary use prohibited area provided for the purpose of protecting the primary system using a frequency channel F1, the communication device 110 is not notified of the frequency channel F1 as an available channel.

The available spectrum information can also be determined, for example, by the degree of interference to the primary system. Specifically, for example, in a case where it is determined that fatal interference is given to the primary system even outside the secondary use prohibited area, such a frequency channel is not provided in notification as an available channel in some cases. An example of a specific calculation method is described in <2.2.2> described later.

Furthermore, as described above, there may be frequency channels that are not notified as available due to conditions other than primary system protection requirements. Specifically, for example, in order to avoid interference that may occur between the communication devices 110 in advance, there may be cases where a frequency channel being used by another communication device 110 existing in the vicinity of the communication device 110 is not notified as an available channel. In this manner, the available spectrum information set in consideration of interference with the other communication device 110 may be set as, for example, "use recommended spectrum information" and provided together with the available spectrum information. That is, the "use recommended spectrum information" is desirably a subset of the available spectrum information.

Even in a case of affecting the primary system, if the influence can be avoided by reducing the transmission power, the same spectrum as of the primary system or the communication device 110 in the vicinity may be notified as an available channel. In such a case, typically, maximum allowable transmission power information is included in the available spectrum information. The maximum allowable transmission power is typically expressed by EIRP. The maximum allowable transmission power is not necessarily limited thereto, and may be provided by, for example, a combination of conducted power and an antenna gain. Moreover, the antenna gain may be set to an allowable peak gain for each spatial direction.

<2.2.1 Details of required parameters>

As the information that can specify the wireless system that intends to use the frequency band, for example, unique information registered at the time of the registration procedure, the above-described ID information, and the like can be assumed.

Furthermore, the query request can also include query requirement information. The query requirement information can include, for example, information indicating a frequency band for which it is desired to know whether or not it is available. Furthermore, for example, the transmission power information can be included. The communication device 110 that makes an inquiry can include the transmission power information, for example, in a case where it is desired to know only spectrum information in which it is likely that desired transmission power can be used. The query requirement information does not necessarily need to be included in the query request.

The information indicating the frequency band may also include information indicating a format of the available spectrum information. In the IEEE 802.11 standard, a channel number is defined for each band. For example, a flag for requesting availability of a channel defined in such wireless interface technical specifications may be included. As another form, a flag for requesting availability of a unit spectrum range instead of the defined channel may be included. In a case where the unit spectrum is 1 MHz, the available spectrum information is requested for each spectrum range of 1 MHz. In a case where this flag is used, the desired unit spectrum information may be enclosed in the flag.

Furthermore, the query request can also include a measurement report. The measurement report includes results of measurement performed by the communication device 110 and/or the terminal 120. Some or all of the measurement results may be represented by raw data or may be represented by processed data. For example, standardized metrics represented by reference signal received power (RSRP), reference signal strength indicator (RSSI), and reference signal received quality (RSRQ) can be used for measurement.

<2.2.2 Details of available spectrum evaluation processing>

After receiving the query request, the available spectrum is evaluated on the basis of the query requirement information. For example, error! A reference source is not found. For example, as described above, the available spectrum can be evaluated in consideration of existence of the primary system, the secondary use prohibited area thereof, and the communication device 110 in the vicinity.

The communication control device may derive the secondary use prohibited area. For example, in a case where the maximum transmission power $P_{MaxTx(dBm)}$ and the minimum transmission power $P_{MinTx(dBm)}$ are defined, it is possible to calculate the range of the separation distance between the primary system and the secondary system from the following expression and determine the secondary use prohibited area.

[Math. 2]

$$PL^{-1}\left(P_{MaxTx(\text{dBm})} - I_{Th(\text{dBm})}\right)_{(dB)} \leq d < PL^{-1}\left(P_{MinTx(\text{dBm})} - I_{Th(\text{dBm})}\right)_{(dB)}$$

$I_{Th(dBm)}$ is allowable interference power (a limit value of allowable interference power), d is a distance between a predetermined reference point and the communication device 110, and $PL()_{(dB)}$ is a function of a propagation loss. Therefore, the spectrum availability can be determined according to the positional relationship between the primary system and the communication device 110. Furthermore, in a case where transmission power information or power range information desired to be used by the communication device 110 is supplied in a request, the spectrum availability can be determined by calculating $PL^{-1}(P_{Tx(dBm)} - I_{Th(dBm)})$ and performing a comparison with the above-described range expression.

The maximum allowable transmission power information may be derived. Typically, the maximum allowable transmission power information is calculated by using allowable interference power information in the primary system or a protection zone thereof, position information of the reference point for calculating an interference power level suffered by the primary system, registration information of the communication device 110, and a propagation loss estimation model. Specifically, as an example, it is calculated by the following mathematical expression.

[Math. 3]

$$P_{MaxTx(\text{dBm})} = I_{Th(\text{dBm})} + PL(d)_{(\text{dB})} \qquad (2)$$

In Expression (2), the antenna gain in a transceiver is not included, but the antenna gain in the transceiver may be included according to the maximum allowable transmission power expression method (EIRP, conducted power, and the like) or the reception power reference point (antenna input point, antenna output point, and the like). Furthermore, a safety margin or the like for compensating for variation due to fading may be included. Furthermore, a feeder loss may be considered as necessary. Furthermore, it is possible to similarly perform calculation for an adjacent channel by adding the adjacent channel leakage ratio (ACRL) or an out-of-band emission maximum value.

Furthermore, Expression (2) is described on the basis of the assumption that the single communication device 110 is an interference source (single station interference). For example, in a case where it is necessary to consider aggregated interference from a plurality of communication devices 110 at the same time, a correction value may be added. Specifically, for example, the correction value can be determined on the basis of three types (fixed/predetermined, flexible, flexible minimized) of interference margin distribution methods disclosed in Non-Patent Document 2 (ECC Report 186).

Note that the allowable interference power information itself is not necessarily directly available as in Expression (2). For example, in a case where a required signal power-to-interference power ratio (SIR) of the primary system, a signal to interference plus noise ratio (SINR), and the like are available, they may be converted into allowable interference power and used. Note that such conversion processing is not limited to this processing, and may be applied to processing of other procedures.

Note that Expression 2 is expressed using logarithms, but as a matter of course, may be used by being converted into antilogarithms at the time of implementation. Furthermore, all parameters in logarithmic notation described in the present disclosure may be used by being appropriately converted into antilogarithms.

Furthermore, in a case where the above-described transmission power information is included in the query requirement information, the available spectrum can be evaluated by a method different from the above-described method. Specifically, for example, in a case where it is assumed that desired transmission power indicated by transmission power information is used, when an estimated interference quantity is less than allowable interference power in the primary system or a protection zone thereof, it is determined that the frequency channel is available, and the communication device 110 is notified of the frequency channel.

Furthermore, for example, in a case where an area or a space in which the communication device 110 can use the frequency band is determined in advance similarly to an area of a radio environment map (REM), the available spectrum information may be simply derived on the basis of only coordinates (coordinates or latitude, longitude, and ground level of the X axis, the Y axis, and the Z axis of communication device 110) included in the position information of the communication device 110. Furthermore, for example, even in a case where a lookup table that associates coordinates of a position of the communication device 110 with available spectrum information is prepared, the available spectrum information described above may be derived on the basis of only the position information of the communication device 110. As described above, there are various methods for the method of determining the available spectrum, and it is not limited to the example of the present disclosure.

Furthermore, in a case where the communication control device 130 acquires information regarding capability of a band extension technology such as carrier aggregation (CA) or channel bonding as the frequency band information supported by the communication device 110, the communication control device 130 may include an available combination, a recommended combination, or the like thereof in the available spectrum information.

Furthermore, in a case where the communication control device 130 acquires information regarding a combination of frequency bands supported by the dual connectivity and the multi connectivity as the frequency band information supported by the communication device 110, the communication control device 130 may include information such as an available spectrum and a recommended spectrum in the available spectrum information for the dual connectivity and the multi connectivity.

Furthermore, in a case of providing the available spectrum information for the band extension technology as described above, when the imbalance of the maximum allowable transmission power occurs between the plurality of frequency channels, the available spectrum information may be provided after adjusting the maximum allowable transmission power of each frequency channel. For example, from a perspective of primary system protection, the maximum allowable transmission power of each frequency channel may be aligned with the maximum allowable transmission power of a frequency channel having a low maximum allowable power flux density (power spectral density (PSD)).

The evaluation of the available spectrum does not necessarily need to be performed after the query request is received. For example, after normal completion of the above-described registration procedure, the communication control device 130 may independently perform the procedure without a query request. In such a case, an REM, a lookup table, or an information table similar to those described above as an example may be created.

Furthermore, the radio wave usage priority such as PAL or GAA may also be evaluated. For example, in a case where the registered device parameter or the query requirement includes information regarding the priority of radio wave use, it may be determined whether spectrum use is possible on the basis of the priority, and the notification may be made. Furthermore, for example, as disclosed in Non-Patent Document 1, in a case where information (in Non-Patent Document 1, it is referred to as a cluster list) regarding the communication device 110 that performs high priority use (for example, PAL) from the user is registered in the communication control device 130 in advance, evaluation may be performed on the basis of the information.

After the evaluation of the available spectrum is completed, the communication control device 130 notifies the communication device 110 of the evaluation result.

The communication device 110 may select a desired communication parameter by using the evaluation result received from the communication control device 130. In a case where a spectrum grant procedure (to be described later) is not employed, the communication device 110 may start radio wave transmission using the selected desired communication parameter as a communication parameter.

<2.3 Spectrum grant procedure>

The spectrum grant procedure is a procedure for the wireless system that intends to use the frequency band to receive the secondary use permission of the spectrum from the communication control device 130. The communication device 110 that performs the spectrum grant procedure as a representative of the wireless system may be the same as or different from the communication device 110 that has performed the procedures so far. Typically, the communication device 110 notifies the communication control device 130 of a spectrum grant request including information that can specify the communication device 110, thereby starting the procedure. Note that, as described above, the available spectrum information query procedure is not essential. Therefore, the spectrum grant procedure may be performed next to the available spectrum information query procedure, or may be performed next to a registration procedure.

In the present embodiment, it is assumed that at least the following two types of spectrum grant request methods can be used.

- Designation scheme
- Flexible scheme

The designation scheme is a request method in which the communication device 110 designates a desired communication parameter and requests the communication control device 130 to permit operation based on the desired communication parameter. Examples of the desired communication parameter include, but are not particularly limited to, a frequency channel to be used, a maximum transmission power, and the like. For example, a wireless interface technology specific parameter (such as a modulation scheme or a duplex mode) may be designated. Furthermore, information indicating radio wave usage priority such as PAL and GAA may be included.

The flexible scheme is a request method in which the communication device 110 designates only a requirement regarding a communication parameter and requests the communication control device 130 to designate a communication parameter that can be permitted for secondary use while satisfying the requirement. Examples of the requirement related to the communication parameter include, but are not particularly limited to, for example, a bandwidth, a desired maximum transmission power, or a desired minimum transmission power, and the like. For example, a wireless interface technology specific parameter (such as a modulation scheme or a duplex mode) may be designated. Specifically, for example, one or more TDD frame structures may be selected in advance and provided in notification.

Similarly to the query request, the spectrum grant request may also include the measurement report in either the designation scheme or the flexible scheme. The measurement report includes results of measurement performed by the communication device 110 and/or the terminal 120. The measurement may be represented by raw data or processed data. For example, standardized metrics represented by reference signal received power (RSRP), reference signal strength indicator (RSSI), and reference signal received quality (RSRQ) can be used for measurement.

Note that the scheme information used by the communication device 110 may be registered in the communication control device 130 at the time of the registration procedure described in <2.1>.

<2.3.1 Details of spectrum grant processing>

After receiving the spectrum grant request, the communication control device 130 performs spectrum grant processing on the basis of the spectrum grant request scheme. For example, using the technique described in <2.2>, it is possible to perform the spectrum grant processing in consideration of the primary system, the secondary use prohibited area, the existence of the communication device 110 in the vicinity, and the like.

In a case where the flexible scheme is used, the maximum allowable transmission power information may be derived using the method described in <2.2.2>. Typically, the maximum allowable transmission power information is calculated by using allowable interference power information in the primary system or a protection zone thereof, position information of the reference point for calculating an interference power level suffered by the primary system, registration information of the communication device 110, and a propagation loss estimation model. Specifically, as an example, it is calculated by the above Expression (2).

Furthermore, as described above, Expression (2) is described on the basis of the assumption that the single communication device 110 is an interference source. For example, in a case where it is necessary to consider aggregated interference from a plurality of communication devices 110 at the same time, a correction value may be added. Specifically, for example, the correction value can be determined on the basis of three types of methods (fixed/predetermined, flexible, flexible minimized) disclosed in Non-Patent Document 2 (ECC Report 186).

The communication control device 130 can use various propagation loss estimation models in the spectrum grant procedure, available spectrum evaluation processing for an available spectrum information query request, and the like. In a case where a model is designated for each application, it is desirable to use the designated model. For example, in Non-Patent Document 1 (WINNF-TS-0112), a propagation loss model such as Extended Hata (eHATA) or Irregular Terrain Model (ITM) is employed for each application. Of course, the propagation loss model is not limited thereto.

There are also propagation loss estimation models that require information regarding radio wave propagation paths. The information regarding the radio wave propagation path can include, for example, information indicating inside and outside of a line of sight (Line of Sight (LOS) and/or Non Line of Sight (NLOS)), topographical information (undulations, sea levels, and the like), environmental information (Urban, Suburban, Rural, Open Sky, and the like), and the like. When using the propagation loss estimation model, the communication control device 130 may estimate these pieces of information from the registration information of the communication device 110 or the information of the primary system that is already acquired. Alternatively, in a case where there is a parameter designated in advance, it is desirable to use the parameter.

In a case where the propagation loss estimation model is not designated in a predetermined application, the propagation loss estimation model may be selectively used as necessary. For example, when estimating the interference power to the other communication device 110, a model that is calculated with a small loss such as a free space loss model is used, but when estimating the coverage of the communication device 110, a model that is calculated with a large loss can be used.

Furthermore, in a case where the designated propagation loss estimation model is used, as an example, the spectrum grant processing can be performed by evaluating an interfering risk. Specifically, for example, in a case where it is assumed that desired transmission power indicated by transmission power information is used, when an estimated interference quantity is less than the allowable interference power in the primary system or a protection zone thereof, it is determined that use of the frequency channel can be permitted, and the communication device 110 is notified of the determination.

In any technique of the designation scheme and the flexible scheme, the radio wave usage priority such as PAL or GAA may also be evaluated similarly to the query request. For example, in a case where the registered device parameters or the query requirements include information regarding the radio wave usage priority, it may be determined whether or not it is possible to use a spectrum on the basis of the priority, and the notification may be made. Furthermore, for example, in a case where information regarding the communication device 110 that performs high priority use (for example, PAL) from the user is registered in the communication control device 130 in advance, evaluation may be performed on the basis of the information. For example, in Non-Patent Document 1 (WINNF-TS-0112), information regarding the communication device 110 is referred to as a cluster list.

Furthermore, in any calculation described above, the spectrum availability may be determined by performing correction of the position information or the coverage by using the positioning accuracy information (location uncertainty) when the position information of the communication device is used.

The spectrum grant processing is not necessarily performed due to reception of the spectrum grant request. For example, after the normal completion of the above-described registration procedure, the communication control device 130 may independently perform the spectrum grant processing without the spectrum grant request. Furthermore, for example, the spectrum grant processing may be performed at regular intervals. In such a case, the above-described REM, a lookup table, or information tables similar thereto may be created. Thus, the spectrum that can be permitted is determined only by the position information, and thus the communication control device 130 can quickly return a response after receiving the spectrum grant request.

<2.4 Spectrum use notification (spectrum use notification/heartbeat)>

The spectrum use notification is a procedure in which the wireless system using the frequency band notifies the communication control device 130 of the use of the spectrum based on the communication parameter allowed to be used in the spectrum grant procedure. The communication device 110 that performs the spectrum use notification as a representative of the wireless system may be the same as or different from the communication device 110 that has performed the procedures so far. Typically, the communication device 110 notifies the communication control device 130 of a notification message including information that can specify the communication device 110.

The spectrum use notification is desirably performed periodically until the use of the spectrum is rejected from the communication control device 130. In that case, the spectrum use notification is also referred to as a heartbeat.

After receiving the spectrum use notification, the communication control device 130 may determine whether to start or continue the spectrum use (in other words, radio wave transmission at the permitted spectrum). Examples of the determination method include confirmation of the spectrum use information of the primary system. Specifically, it is possible to determine permission or rejection of start or continuation of the spectrum use (radio wave transmission at the permitted spectrum) on the basis of a change in the use spectrum of the primary system, a change in a spectrum use situation of the primary system in which the use of radio waves is not steady (for example, a ship radar of CBRS in the United States), and the like. If the start or continuation is permitted, the communication device 110 may start or continue the spectrum use (radio wave transmission at the permitted spectrum).

After receiving the spectrum use notification, the communication control device 130 may command reconfiguration of communication parameters to the communication device 110. Typically, the reconfiguration of communication parameters can be commanded in a response of the communication control device 130 to the spectrum use notification. For example, information regarding recommended communication parameters (hereinafter, recommended communication parameter information) can be provided. The communication device 110 to which the recommended communication parameter information has been provided desirably performs the spectrum grant procedure described in <2.4> again using the recommended communication parameter information.

<2.5 Supplement of various procedures>

The various procedures described above do not necessarily need to be implemented individually, as described below. For example, two different procedures may be implemented by substituting a third procedure having roles of the two different procedures. Specifically, for example, the registration request and the available spectrum information query request may be integrally provided in notification. Furthermore, for example, the spectrum grant procedure and the spectrum use notification may be integrally performed. As a matter of course, it is not limited to these combinations, and three or more procedures may be performed integrally. Furthermore, as described above, one procedure may be separately performed a plurality of times.

Furthermore, the expression "acquisition" or an expression equivalent thereto in the present disclosure does not necessarily mean acquisition according to the procedure described in the present disclosure. For example, although it is described that the position information of the communication device 110 is used in the available spectrum evaluation processing, the information acquired in the registration procedure does not necessarily need to be used, and in a case where position information is included in an available spectrum query procedure request, this position information may be used. In other words, the procedure for acquisition described in the present disclosure is an example, and acquisition by other procedures is also permitted within the scope of the present disclosure and within the scope of technical feasibility.

Furthermore, the information described to be included in the response from the communication control device 130 to the communication device 110 may be actively provided in notification from the communication control device 130 by a push scheme if possible. As a specific example, the available spectrum information, the recommended communication parameter information, a radio wave transmission continuation rejection notification, and the like may be provided in notification by the push scheme.

<2.6 Various procedures for terminal>

So far, the description has been made mainly assuming the processing in the communication device 110A. However, in some embodiments, not only the communication device 110A but also the terminal 120 and the communication device 110B can operate under management of the communication control device 130. That is, a scenario in which the communication parameters are determined by the communication control device 130 is assumed. Even in such a case, basically, the respective procedures described in <2.1> to <2.4> can be used. However, unlike the communication device 110A, the terminal 120 and the communication device 110B need to use the spectrum managed by the communication control device 130 for the backhaul link, and cannot perform radio wave transmission without permission. Therefore, it is desirable to start backhaul communication for the purpose of accessing the communication control device 130 only after detecting a radio wave or an authorization signal transmitted by the communication device 110A (communication device 110 capable of providing wireless communication service or the communication device 110 as a master in a master-secondary system).

On the other hand, under the management of the communication control device 130, there may be cases where, also in the terminal or the communication device 110B, an allowable communication parameter is set for the purpose of protecting the primary system. However, the communication control device 130 cannot know the position information and the like of these devices in advance. Furthermore, these devices are also likely to have mobility. That is, the position information is dynamically updated. Depending on the laws, in a case where the position information changes by a certain amount or more, re-registration to the communication control device 130 may be required in some cases.

In consideration of such various use forms, operation forms, and the like of the terminal 120 and the communication device 110, in the operation form of the TVWS (Non-Patent Document 3) defined by the Office of Communications (Ofcom), the following two types of communication parameters are defined.

- Generic operational parameters
- Specific operational parameters

The generic operational parameters are communication parameters defined as "parameters that can be used by any slave WSD located within the coverage area of a predetermined master WSD (corresponding to the communication device 110)" in Non-Patent Document 3. A feature is that it is calculated by a WSDB without using the position information of the slave WSD.

The generic operational parameters can be provided by unicast or broadcast from the communication device 110 that is already permitted to perform radio wave transmission from the communication control device 130. For example, a broadcast signal represented by a contact verification signal (CVS) defined in Part 15 Subpart H of the FCC rule in the United States can be used. Alternatively, it may be provided by a broadcast signal specific to a wireless interface. Therefore, the terminal 120 and the communication device 110B can use the generic operational parameters as the communication parameters used for radio wave transmission for the purpose of accessing the communication control device 130.

The specific operational parameters are communication parameters defined as "parameters that can be used by a specific slave white space device (WSD)" in Non-Patent Document 3. In other words, they are communication parameters calculated using device parameters of the slave WSD corresponding to the terminal 120. A feature is that it is calculated by a white space database (WSDB) using the position information of the slave WSD.

The CPE-CBSD Handshake Procedure defined in Non-Patent Document 4 can be regarded as another form of the procedure related to the terminal. The CPE-CBSD does not have a wired backhaul line and accesses the Internet via the BTS-CBSD. Therefore, permission for radio wave transmission in the CBRS band cannot be acquired from a SAS without a special regulation or procedure. The CPE-CBSD Handshake Procedure allows the CPE-CBSD to perform radio wave transmission at the same maximum EIRP and the minimum necessary duty cycle as those of a terminal (EUD) until permission for radio wave transmission is acquired from the SAS. Accordingly, the communication device 110B can construct a line for acquiring permission for radio wave transmission from the communication control device 130 by setting the transmission EIRP to the maximum EIRP of the terminal and then performing wireless communication with the communication device 110A at the minimum necessary duty cycle. After the permission for the radio wave transmission is acquired, it is possible to use up to the maximum EIRP defined by the communication device within the range of the permission.

<2.7 Procedure occurring between communication control devices>

<2.7.1 Information exchange>

The communication control device 130 can exchange management information with another communication control device 130. At least the following information is desirably exchanged.

- Information related to communication device 110
- Area information
- Protection target system information

The information related to the communication device 110 includes at least the registration information and the communication parameter information of the communication device 110 operating under permission of the communication control device 130. The registration information of the communication device 110 having no permitted communication parameter may be included.

The registration information of the communication device 110 is typically the device parameters of the communication control device 130 registered in the communication device 110 in the above-described registration procedure. Not all of the registered information is necessarily exchanged. For example, information that may correspond to personal information does not need to be exchanged. Furthermore, when the registration information of the communication device 110 is exchanged, the registration information may be encrypted and exchanged, or the information may be exchanged after the content of the registration information is made obfuscated. For example, information converted into a binary value or information signed using an electronic signature mechanism may be exchanged.

The communication parameter information of the communication device 110 is typically information related to the communication parameters currently used by the communication device 110. At least information indicating the use spectrum and the transmission power is desirably included. Other communication parameters may be included.

The area information is typically information indicating a predetermined geographical region. This information can include region information of various attributes in various modes.

For example, as in a PAL protection area (PPA) disclosed in Non-Patent Document 1 (WINNF-TS-0112), protection zone information of the communication device 110 serving as a high priority secondary system may be included in the area information. The area information in this case can be expressed by, for example, a set of three or more coordinates indicating a geographical position. Furthermore, for example, in a case where a plurality of the communication control devices 130 can refer to a common external database, the area information is expressed by a unique ID, and the actual geographical region can be referred to from the external database using the ID.

Furthermore, for example, information indicating the coverage of the communication device 110 may be included. The area information in this case can also be expressed by, for example, a set of three or more coordinates indicating a geographical position. Furthermore, for example, assuming that the coverage is a circle centered on the geographical position of the communication device 110, the coverage can also be expressed by information indicating a size of a radius. Furthermore, for example, in a case where a plurality of the communication control devices 130 can refer to a common external database that records area information, the information indicating the coverage is expressed by a unique ID, and the actual coverage can be referred to from the external database using the ID.

Furthermore, as another aspect, information related to an area section determined in advance by the government or the like can also be included. Specifically, for example, it is possible to indicate a certain region by indicating an address. Furthermore, for example, a license area or the like can be similarly expressed.

Furthermore, as still another aspect, the area information does not necessarily express a planar area, and may express a three-dimensional space. For example, it may be expressed using a spatial coordinate system. Furthermore, for example, information indicating a predetermined closed space such as a floor number, a floor, and a room number of a building may be used.

The protection target system information is, for example, information of a wireless system treated as a protection target, such as the aforementioned existing layer (incumbent tier). Examples of the situation in which this information needs to be exchanged include, for example, a situation in which cross-border coordination is required. It is well conceivable that different protection targets exist in the same band between neighboring countries or regions. In such a case, the protection target system information can be exchanged between different communication control devices 130 in different countries or regions to which the communication control devices belong as necessary.

As another aspect, the protection target system information may include information of a secondary licensee and information of the wireless system operated by the secondary licensee. The secondary licensee is specifically a lessee of the license, and for example, it is assumed that the secondary licensee borrows PAL from the holder and operates the wireless system owned by itself. In a case where the communication control device 130 performs the rent management independently, information of the secondary licensee and information of the wireless system operated by the secondary licensee can be exchanged with another communication control device for the purpose of protection.

These pieces of information can be exchanged between the communication control devices 130 regardless of the decision-making topology applied to the communication control device 130.

Furthermore, these pieces of information can be exchanged in various schemes. Examples thereof will be described below.

- ID designation scheme
- Period designation scheme
- Region designation scheme
- Dump scheme

The ID designation scheme is a scheme in which an ID, given in advance to specify information managed by the communication control device 130, is used to acquire information corresponding to the ID. For example, it is assumed that a first communication control device 130 manages the communication device 110 with ID: AAA. At this time, a second communication control device 130 designates ID: AAA to the first communication control device 130 and makes an information acquisition request. After receiving the request, the first communication control device 130 searches for information of ID: AAA, and provides notification of information regarding the communication device 110 with ID: AAA, for example, registration information, communication parameter information, and the like as a response.

The period designation scheme is a scheme in which information satisfying a predetermined condition can be exchanged in a designated specific period.

Examples of the predetermined condition include the presence or absence of information update. For example, in a case where acquisition of information regarding the communication device 110 in the specific period is designated by a request, the registration information of the communication device 110 newly registered within the specific period can be provided in notification as a response. Furthermore, the registration information or the information of communication parameters of the communication device 110 whose communication parameters have been changed within the specific period can also be provided in notification as a response.

Examples of the predetermined condition include whether or not being recorded by the communication control device 130. For example, in a case where acquisition of information regarding the communication device 110 in the specific period is designated by a request, the registration information or the information of the communication parameters recorded by the communication control device 130 in the period can be provided in notification as a response. In a case where the information is updated in the period, the latest information in the period can be provided in notification. Alternatively, an update history for each piece of the information may be provided in notification.

In the region designation scheme, a specific region is designated, and information of the communication device 110 belonging to the region is exchanged. For example, in a case where acquisition of information regarding the communication device 110 in the specific region is designated by a request, the registration information or the information of the communication parameters of the communication device 110 installed in the region can be provided in notification as a response.

The dump scheme is a scheme of providing the entire information recorded by the communication control device 130. At least the information related to the communication device 110 and the area information are desirably provided by the dump scheme.

The above description of the information exchange between the communication control devices 130 is all based on a pull scheme. That is, a form in which information corresponding to a parameter designated in a request is responded is adopted, and as an example, implementation by the HTTP GET method is possible. However, information may be actively provided to another communication control device 130 by a push scheme without being limited to the pull scheme. As an example, the push scheme can be implemented by the HTTP POST method.

<2.7.2 Command or request procedure>

The communication control devices 130 may give a command or a request with each other. Specifically, as an example, there is reconfiguration of communication parameters of the communication device 110. For example, in a case where it is determined that the first communication device 110 managed by the first communication control device 130 is subject to great interference from the second communication device 110 managed by the second communication control device 130, the first communication control device 130 may request the second communication control device 130 to change communication parameters of the second communication device 110.

As another example, there is reconfiguration of the area information. For example, in a case where calculation of coverage information and protection zone information regarding the second communication control device 130 managed by the second communication device 110 is incomplete, the first communication control device 130 may request the second communication control device 130 to reconfigure the area information. Besides this, an area information reconfiguration request may be made for various reasons.

<2.8 Information transmission means>

A notification (signaling) between entities described so far can be implemented via various media. E-UTRA or 5G NR will be described as an example. As a matter of course, the present embodiment is not limited thereto at the time of implementation.

<2.8.2 Signaling between communication control device 130 and communication device 110>

The notification from the communication device 110 to the communication control device 130 may be performed, for example, in an application layer. For example, the Hyper Text Transfer Protocol (HTTP) may be used. Signaling can be performed by describing required parameters in a message body of the HTTP according to a predetermined manner. Moreover, in a case where the HTTP is used, the notification from the communication control device 130 to the communication device 110 is also performed according to an HTTP response mechanism.

<2.8.3 Signaling between communication device 110 and terminal 120>

The notification from the communication device 110 to the terminal 120 may be performed using, for example, at least one of radio resource control (RRC) signaling, system information (SI), or downlink control information (DCI). Furthermore, examples of a downlink physical channel include a physical downlink control channel (PDCCH), a physical downlink shared channel (PDSCH), a physical broadcast channel (PBCH), an NR-PDCCH, an NR-PDSCH, an NR-PBCH, and the like, but the downlink physical channel may be implemented using at least one of these.

The notification from the terminal 120 to the communication device 110 may be performed using, for example, radio resource control (RRC) signaling or uplink control information (UCI). Furthermore, it may be implemented by using an uplink physical channel (physical uplink control channel (PUCCH), physical uplink shared channel (PUSCH), physical random access channel (PRACH)).

The signaling is not limited to the above-described physical layer signaling, and the signaling may be performed at a higher layer. For example, at the time of implementation at the application layer, the signaling may be implemented by describing a required parameter in a message body of the HTTP according to a predetermined manner.

<2.8.4 Signaling between terminals 120>

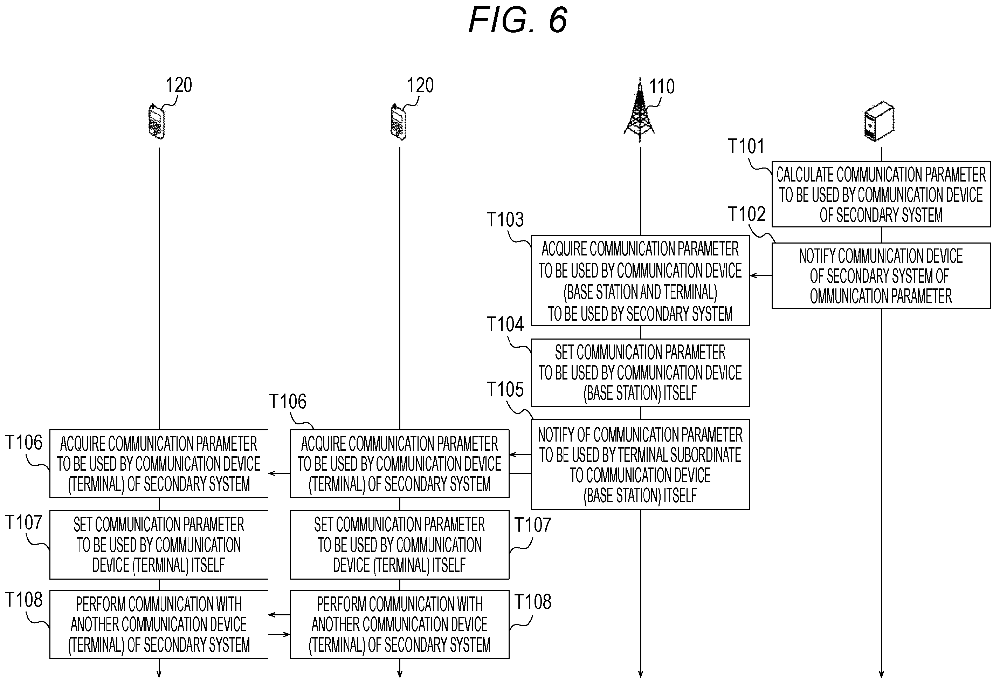

Fig. 6 illustrates an example of a flow of signaling in a case where device-to-device (D2D) or vehicle-to-everything (V2X), which is communication between the terminals 120, is assumed as communication of the secondary system. The D2D or V2X which is communication between the terminals 120 may be performed using a physical sidelink channel (a physical sidelink control channel (PSCCH), a physical sidelink shared channel (PSSCH), or a physical sidelink broadcast channel (PSBCH)). The communication control device 130 calculates a communication parameter to be used by the secondary system (T101) and notifies the communication device 110 of the secondary system of the calculated communication parameter (T102). A value of the communication parameter may be determined and provided in notification, or a condition indicating a range or the like of the communication parameter may be determined and provided in notification. The communication device 110 acquires the communication parameter to be used by the secondary system (T103), and sets the communication parameter that needs to be used by the communication device 110 itself (T104). Then, the terminal 120 is notified of a communication parameter to be used by the terminal 120 subordinate to the communication device 110 (T105). Each of the terminals 120 subordinate to the communication device 110 acquires (T106) and sets (T107) the communication parameter to be used by the terminal 120. Then, communication with another terminal 120 of the secondary system is performed (T108).

A communication parameter in a case where a target frequency channel for spectrum sharing is used in the sidelink (direct communication between the terminals 120) may be provided in notification, acquired, or set in a form associated with a resource pool for the sidelink in the target frequency channel. The resource pool is a radio resource for a sidelink set by a specific frequency resource or time resource. Examples of the frequency resource include a resource block, a component carrier, and the like. The time resource includes, for example, a radio frame, a subframe, a slot, a mini-slot, and the like. In a case where the resource pool is set in a frequency channel to be subjected to the spectrum sharing, the resource pool is set in the terminal 120 by the communication device 110 on the basis of at least one of the RRC signaling, the system information, or the downlink control information. Then, a communication parameter to be applied in the resource pool and the sidelink is also set in the terminal 120 by the communication device 110 on the basis of at least one of the RRC signaling, the system information, or the downlink control information from the communication device 110 to the terminal 120. The notification of setting of the resource pool and the notification of the communication parameter to be used in the sidelink may be performed simultaneously or individually.

<<3. Embodiments of present invention>>

(First embodiment)

In the 6 GHz band, the United States Federal Communications Commissions (FCC) and Innovation, Science and Economic Development Canada (ISED) permit high-power output and outdoor use by an unlicensed device (Wi-Fi, 5G NR-U, and the like) using the AFC system. Such an unlicensed device is called a standard power device (SPD). On the other hand, the use of the 6 GHz band without using the automated frequency coordination (AFC) system is permitted under the condition of low power indoor (LPI), and it is expected that many Wi-Fi access points (APs) will be sold as LPI devices for individuals.

In recent years, as represented by Wi-Fi CERTIFIED EasyMesh™, cases of using a plurality of APs for the purpose of expanding indoor coverage are increasing. By arranging a plurality of low-power APs, it is possible to extend the indoor coverage without using the AFC system. Moreover, by using the SPD capable of high output indoors, the number of APs to be arranged can be reduced and it is expected that expandability is further expanded, but use of the AFC system requires use of the AFC system, and a general user has a high threshold.

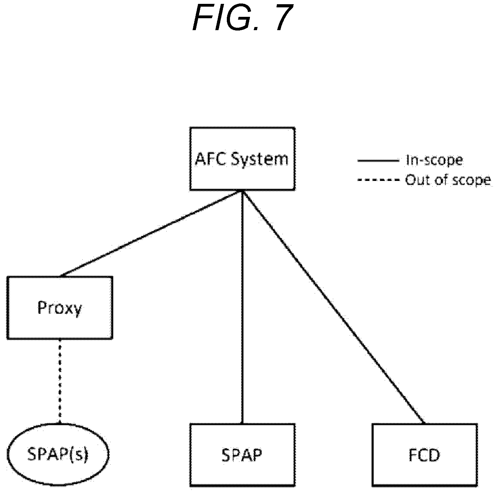

In general, home fixed Internet access is only possible after a contract with an Internet Service Provider (ISP). Which line provider is used is often included in the contract plan provided by the ISP. Therefore, it is assumed that a service in which the ISP substitutes for access to the AFC system appears for individuals. In consideration of interconnectivity between communication devices and the like, it is desirable to standardize the interaction between a device on the ISP side and the SPD, but in the discussion currently performed in the Wi-Fi Alliance or the WInnForum, the interface between the AFC system and the SPD is the scope as illustrated in Fig. 7 illustrating the Protocol Interface (excerpted from WINNF-TS-3005-V1.1.0). Standard Power Access Point (SPAP) and Fixed Client Device (FCD) in Fig. 7 correspond to SPD. There is no discussion assuming a use case in which the ISP substitutes for access to the AFC system. In particular, although an entity called proxy (Proxy) that can access the AFC system on behalf of a plurality of SPDs is defined and it can be assumed that the ISP operates the proxy, at present, the interface between the proxy and the SPD is out of the scope of discussion (see a broken line between the proxy and the SPAP), and is implementation dependent.

Therefore, the present embodiment first discloses a technique in which an ISP substitutes access to an AFC system using a proxy for individuals. Note that, in the implementation, it is not limited to the use by the ISP. The present embodiment can be widely applied, for example, in a case where an operator responsible for operation and management of the communication device and having direct contact with the AFC system side does not match an actual user of the communication device, and the like.

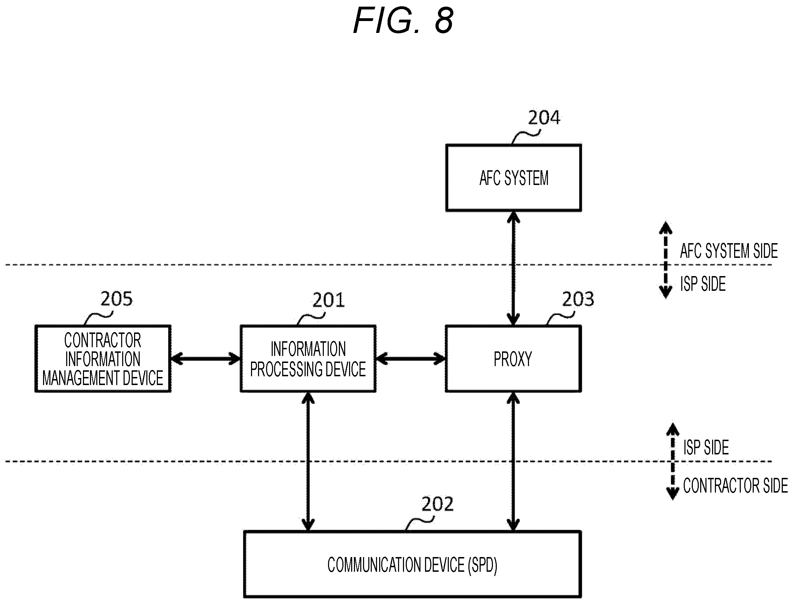

Fig. 8 is an overall block diagram of a communication system according to the present embodiment. The communication system in Fig. 8 includes an information processing device 201, one or a plurality of SPDs (communication devices) 202, a proxy 203, an AFC system 204 (control system), and a contractor information management device 205 (information management device).

These components 201 to 205 are connected to one another via one or more wired or wireless communication networks. The one or more communication systems include a local wireless network such as Wi-Fi, a cellular communication network such as 4G, 5G, or 6G, and the like.

As illustrated in Fig. 8, it is assumed that the proxy 203, the contractor information management device 205, and the information processing device 201 are operated by the ISP, but are not limited to this mode. The user of the SPD 202 is assumed to be a contractor of a line, but may be a person permitted to use the line by the contractor. As an example, the SPD 202 of Fig. 8 corresponds to the communication devices 110A and 110B of Fig. 1.

The proxy 203 represents one or more SPDs 202 for access to the AFC system 204. The SPD 202 is a device serving as a client of the AFC system 204. Since the proxy 203 requests the AFC system 204 to allocate the available spectrum of the SPD 202, it is necessary to register or provide the following information regarding the SPD 202 in the AFC system 204.

-    Authentication ID (Examples: FCC ID, IC ID (ISED Certification ID), and the like)

- Device serial number (serial number)
- Geolocation information (latitude, longitude)
- Geolocation information uncertainty (location uncertainty)
- Ground level (height above ground level)
- Ground level uncertainty (vertical uncertainty)

In the AFC system defined by the Wi-Fi Alliance and the interface standard between SPDs, geolocation information and geolocation information uncertainty are integrated and handled as "area of location uncertainty". "Area of location uncertainty" means that the SPD exists somewhere in a designated region (area), that is, means a two-dimensional geographical range or region in which the SPD may exist.

As the format of "area of location uncertainty", three types of ellipse type (elliptical format), polygon type (polygon format. Free form) and radialPolygon are defined. According to the specifications of the Wi-Fi Alliance and the WInnForum, the AFC system 204 determines a secondary available spectrum and a maximum allowable transmission power (transmission power) within a three-dimensional region (collectively referred to as volume of location uncertainty) obtained by adding ranges of ground levels represented by a ground level (height above ground level) and a ground level uncertainty (vertical uncertainty) to a two-dimensional area of location uncertainty. The AFC system 204 provides information (secondary available spectrum information) indicating the determined spectrum and the allowable maximum transmission power to the SPD 202 or the proxy 203. The secondary available spectrum information includes information of the secondary available spectrum (channel) for the SPD 202 and the maximum transmission power allowed for the SPD 202. The maximum transmission power is, for example, a maximum EIRP or a maximum PSD per 1 MHz.

In general, an access point (AP) is installed in a home to connect to a fixed Internet line in the home. SPD is required to have geolocation capability (geolocation function) in principle, but typically, detection accuracy of a position (for example, latitude and longitude) decreases indoors. Therefore, there is a concern that many situations arise in which a region including the outdoors is forced to be designated in the "area of location uncertainty" or the like. When determining the secondary available spectrum and the like, the AFC system can consider building entry loss for an indoor-installed access point (in the Wi-Fi Alliance standard, a Boolean parameter indicating whether or not the user is indoors is defined), but it is required to determine the secondary available spectrum and the like in the most constrained place among places in a location in the "area of location uncertainty" and the like. Therefore, in a situation where it is necessary to designate a region including the outdoors for "area of location uncertainty" or the like, although the SPD is actually located indoors, it may occur that only the secondary available spectrum or the like when installed outdoors can be permitted to the SPD.

For the SPD that cannot have the geolocation function, information (for example, information of a region in which SPD may exist) regarding the position of the SPD may be regularly acquired from an external information source. However, since the definition of indoor and outdoor is not uniquely defined from the viewpoint of radio wave use, it is considered difficult to technically determine whether the position of the SPD is indoor or outdoor. Moreover, even if the position of the SPD is declared to be indoor from the user side, it is also difficult to trust that the SPD is installed indoors from the viewpoint of the AFC system.

The information processing device 201 according to the present embodiment determines whether or not the SPD is installed in the building of the contractor's address indicated by contractor information stored in the contractor information management device 205 on the basis of information of a region (first position range) in which the SPD 202 calculated from the measured position of the SPD 202 can exist. In a case where the SPD is installed in the building, a region where the building exists is determined as a region where the SPD 202 can exist (second position range). The information processing device 201 generates information (second position range information) indicating the determined region and provides the information to the SPD 202 or the proxy 203.

Typically, when subscribing to an ISP, a contractor registers a contractor address with the ISP. Furthermore, by acquiring information of a building (target building) from the contractor address and using building data of the building, it is possible to know an outer peripheral line of the building (for example, basic map information https://www.gsi.go.jp/kiban/towa.html). By using the outer peripheral line of the building, a geographical range (region) in which the SPD 202 can exist is specified, and information (second position range information) to be registered in the AFC system 204 is generated on the basis of the specified geographical range. By supplementarily using the contractor information in this manner, it is possible to specify the region where the SPD 202 can exist with higher accuracy than in a case where the region where the SPD 202 can exist is specified only on the basis of the position measured by the SPD. The information processing device 201 provides information (second position range information) indicating the determined region to the SPD 202 or the proxy 203 as "area of location uncertainty". The proxy 203 registers the second position range information provided from the information processing device 201 or the second position range information provided via the SPD 202 in the AFC system 204. The AFC system 204 determines the available spectrum and the maximum transmission power to be allocated to the SPD 202 on the basis of the second position range information, and transmits information indicating the determined frequency and the like to the SPD 202 via the proxy 203 or directly.

As described above, the access of the SPD to the AFC system via the proxy can be implemented, the information of the region where the SPD can exist can be acquired with high accuracy and registered in the AFC system, and the frequency can be appropriately allocated to the SPD by the AFC system. Hereinafter, the present embodiment will be described in more detail.

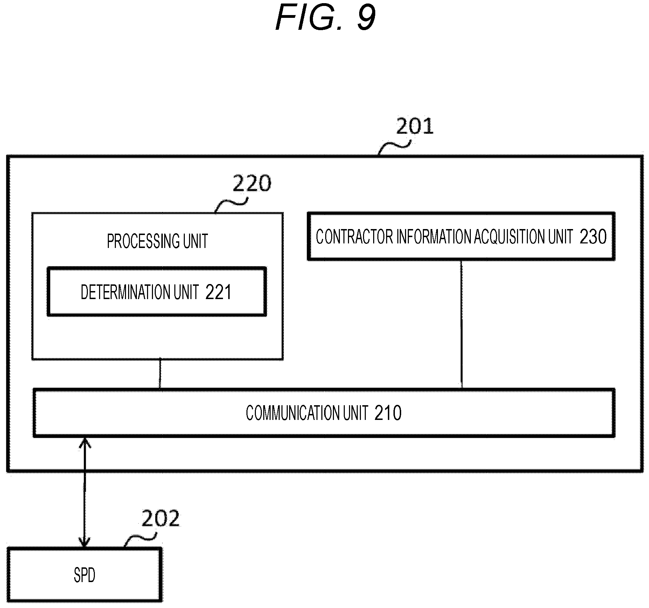

Fig. 9 is a block diagram illustrating an example of the information processing device 201 according to the present embodiment.

The information processing device 201 includes a communication unit 210, a processing unit 220, and a contractor information acquisition unit 230. The communication unit 210 communicates with the SPD 202, the proxy 203, and the contractor information management device 205 in a wired or wireless manner. The communication unit 210 includes a transmission unit that transmits data or information to each of the SPD 202, the proxy 203, and the contractor information management device 205, and a reception unit that receives data or information from each of the SPD, the proxy, and the contractor information management device. The communication unit 210 may be connected to different networks from the SPD 202, the proxy 203, and the contractor information management device 205, and in this case, may include different communication interfaces. The communication unit 210 includes at least one antenna.

The contractor information acquisition unit 230 acquires the contractor information of the contractor of the SPD 202 that has accessed the information processing device 201 from the contractor information management device 205. The contractor information management device 205 stores contractor information managed by the Internet service provider that has contracted with the contractor. In a case where a provision request (position information provision request) of the second position range information is received by the communication unit 210 from the SPD 202, the contractor information of the contractor of the SPD 202 is acquired from the contractor information management device 205. The position information provision request includes first information regarding the position of the SPD 202. As an example, the first information includes the position (measurement position) measured by the SPD 202, and further includes a range of uncertainty of the position. The set of position and uncertainty range corresponds to a region (first position range) where the SPD 202 may be present. The information indicating the first position range is described as first position range information or first information.

That is, the first position range is a region where the SPD 202 can exist, which is specified on the basis of the measurement position of the SPD 202 and the range of uncertainty of the measurement position. The range of uncertainty may be any shape such as an ellipse type (elliptical form), a polygon type, or a radialPolygon described above. The measurement position corresponds to the geolocation information (latitude, longitude) described above, and the range of uncertainty corresponds to the geolocation information uncertainty (location uncertainty) described above. Alternatively, the measurement position corresponds to the geolocation information (latitude, longitude) and the ground level (height above ground level), and the range of uncertainty corresponds to the geolocation information uncertainty (location uncertainty) and the ground level uncertainty (vertical uncertainty). The first position range may correspond to either "area of location uncertainty" or "volume of location uncertainty".

The contractor information includes information such as an ID, a name, an address, and a contact address of the contractor.

The processing unit 220 or a determination unit 221 specifies a region where a building at the contractor's address indicated in the contractor information exists on the basis of map data, and determines whether the SPD 202 exists or is installed in the building on the basis of the specified building region and the first position range information. For example, the determination is made on the basis of the area (size) of the region where the specified building region overlaps with the position range indicated by the first position range information. The specified building region corresponds to a first region for which it is determined whether or not the SPD 202 is present.

In a case where it is determined that the SPD 202 is installed in a building, the processing unit 220 generates second position range information (second information) indicating the region of the building as a geographical range (second position range) in which the SPD 202 can exist. The second position range may correspond to either "area of location uncertainty" or "volume of location uncertainty". The processing unit 220 transmits the second position range information to the SPD 202 as a response corresponding to the position information provision request.

Each block of the information processing device 201 illustrated in Fig. 9 is configured by a hardware circuit, software (program or the like), or both of them. Furthermore, the information processing device 201 may be provided with a block (not illustrated), for example, a storage unit. The storage unit can be configured by any storage device such as a memory device, a magnetic storage device, or an optical disk. The processing of each block of the information processing device 201 may be implemented by reading the program stored in the storage unit and causing the processor to execute the program.

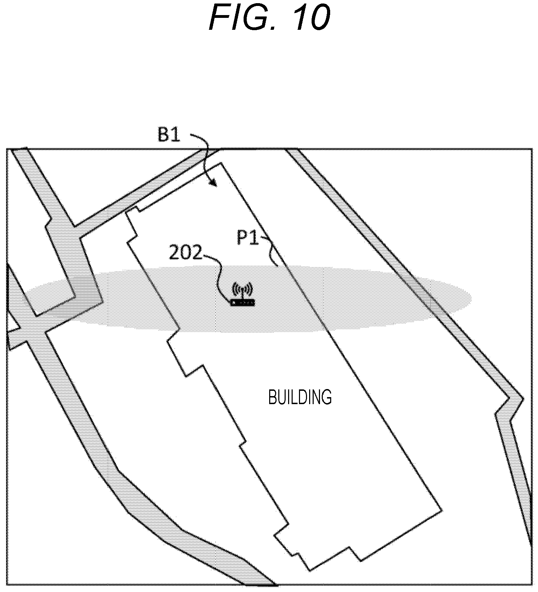

Hereinafter, processing in which the information processing device 201 generates the second position range information will be described with reference to Figs. 10 to 13. Here, an example is illustrated in which information of "area of location uncertainty" is generated as the second position range information.

As illustrated in Fig. 10, the building B1 is indicated on the map data, and the SPD 202 of the contractor is installed inside the building B1. The SPD 202 is connected to the information processing device 201 (not illustrated) in a wireless or wired manner. The information processing device 201 acquires the first position range information P1 from the SPD 202.

As an example, the first position range information P1 includes the above-described geolocation information (latitude, longitude) and geolocation information uncertainty. In a case where the three-dimensional range including the altitude is considered, it further includes the ground level and the ground level uncertainty.

The information processing device 201 communicates with the contractor information management device 205 to acquire the address information of the contractor of the SPD 202, and specifies the target building B1 in the map data from the acquired address information.

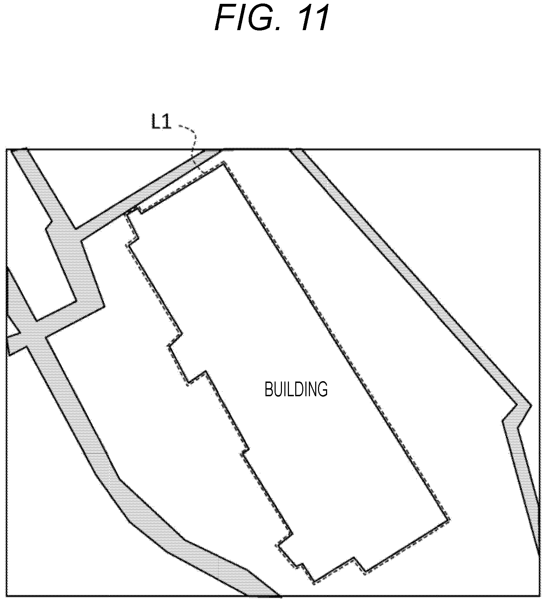

Fig. 11 illustrates a region of the specified building B1 by an outer peripheral line L1. The outer peripheral line L1 can be acquired from building data of the building B1 included in the map data.

The information processing device 201 compares the acquired first position range information P1 with the address information of the contractor, and determines whether the SPD 202 is installed at the contractor's address, that is, whether the SPD 202 is installed in a building at the contractor's address.

For example, a region in which the region indicated by the address information of the contractor and the region indicated by the first position range information P1 overlap may be calculated, and the determination may be made on the basis of the size of the overlapping region.

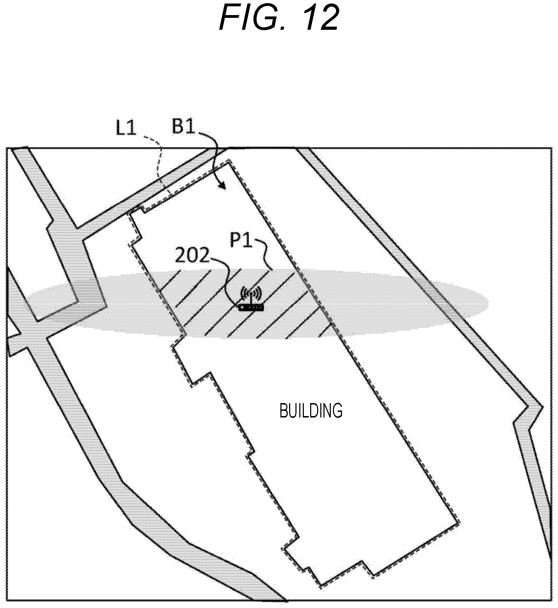

In Fig. 12, a region in which the region surrounded by the outer peripheral line L1 and the region indicated by the first position range information P1 in Fig. 10 overlap is indicated by hatching. The shaded region is a part of the region indicated by the first position range information P1.

For example, in a case where the size of the overlapping region is equal to or larger than the threshold, it may be determined that the SPD 202 is installed in the building at the contractor's address, and in a case where the size is less than the threshold value, it may be determined that the SPD is not installed. Alternatively, in a case where the ratio between the size of the overlapping region and the size of the region indicated by the first position range information P1 is equal to or more than a threshold, it may be determined that the SPD 202 is installed in the building at the contractor's address, and in a case where the ratio is less than the threshold value, it may be determined that the SPD is not installed. Alternatively, in a case where the ratio between the size of the overlapping region and the size of the region indicated by the address information is equal to or more than a threshold, it may be determined that the SPD 202 is installed in the building at the contractor's address, and in a case where the ratio is less than the threshold, it may be determined that the SPD is not installed. As another example, it may be determined whether the measurement position of the SPD 202, that is, geolocation information (latitude, longitude), is included within the region of the address information, and if so, it may be determined that the SPD 202 is installed in the building at the contractor's address, and if not, it may be determined that it is not installed.

In a case where the SPD 202 is determined to be installed in the building at the contractor's address, the information processing device 201 sets a region surrounded by the outer peripheral line L1 of the target building B1 as the second position range of the SPD 202, that is, "area of location uncertainty".

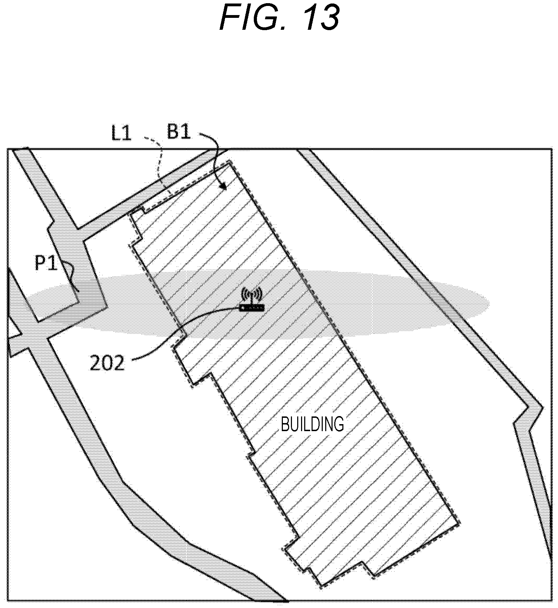

In Fig. 13, a region surrounded by the outer peripheral line L1 of the building B1 is indicated by hatching. This region is the second position range of the SPD 202, that is, "area of location uncertainty".

The information processing device 201 transmits information (second position range information) of "area of location uncertainty" to the SPD 202, the proxy 203, or both of them.

In the example described with reference to Figs. 10 to 13, "area of location uncertainty" is generated in consideration of only the two-dimensional direction as the second position range information, but "volume of location uncertainty" in the three-dimensional direction may be generated by further considering the ground level and the ground level uncertainty. Hereinafter, a setting example of the ground level and the ground level uncertainty for calculating "volume of location uncertainty" will be described.

The processing unit 220 or the determination unit 221 of the information processing device 201 specifies the height of the building from the three-dimensional building data, and sets the position of half the height of the building as the ground level $H_{SPD(AGL)}$ of the SPD as illustrated in Expression (3). Note that AGL is an abbreviation of Above Ground Level. The processing unit 220 or the determination unit 221 of the information processing device 201 sets a range of half the building height above and below the SPD with respect to the ground level as the ground level uncertainty $\Delta H_{SPD(AGL)}$ of the SPD as expressed in Expression (4). $H_{Building(AGL)}$ represents the height of a building.

[Math. 4]

$$H_{SPD(AGL)} = \frac{H_{Building(AGL)}}{2} \qquad (3)$$

[Math. 5]

$$\Delta H_{SPD(AGL)} = \pm \frac{H_{Building(AGL)}}{2} \qquad (4)$$

In a case where an underground portion exists in the building, after adding the height of the underground portion to the height of the building, the ground level $H_{SPD(AGL)}$ and the ground level uncertainty $\Delta H_{SPD(AGL)}$ of SPD can be set as expressed by the following Formulas (5) and (6). $H_{Underground(AGL)}$ represents the height of the underground portion of a building. Other symbols are the same as those in Expressions (3) and (4).

[Math. 6]

$$H_{SPD(AGL)} = \frac{H_{Building(AGL)} + H_{underground(AGL)}}{2} \qquad (5)$$

[Math. 7]

$$\Delta H_{SPD(AGL)} = \pm \frac{H_{Building(AGL)} + H_{underground(AGL)}}{2} \qquad (6)$$

Thus, the spectrum and transmission power that can be secondarily used by the SPD 202 are common regardless of where the SPD is installed in the building, so that flexibility such as installation change of the SPD in the building is improved.

In the example described so far, the entire building where it is installed is the area of location uncertainty or the volume of location uncertainty, but the area of location uncertainty or the volume of location uncertainty may be set on a floor basis. In this case, the ground level of the SPD and the ground level uncertainty can be calculated on the basis of the ground level of the floor and the ceiling level information in the floor.

For example, the height from the ground to the floor is referred to as a floor ground level $H_{InstalledFloor(AGL)}$, and the height from the floor to the ceiling is referred to as a floor ceiling height $H_{Ceil}$. In this case, the ground level $H_{SPD(AGL)}$ of SPD is set to a value obtained by adding a half of the ceiling height $H_{Ceil}$ to the ground level $H_{InstalledFloor(AGL)}$ of the floor as illustrated in Expression (7). In addition, the ground level uncertainty $\Delta H_{SPD(AGL)}$ of the SPD is set to a half range of the ceiling level $H_{Ceil}$ above and below the ground level of the SPD.

[Math. 8]

$$H_{SPD(AGL)} = H_{InstalledFloor(AGL)} + \frac{H_{Ceil}}{2} \qquad (7)$$

[Math. 9]

$$\Delta H_{SPD(AGL)} = \pm \frac{H_{Ceil}}{2} \qquad (8)$$

In the above description, it is assumed that the SPD 202 is fixedly installed, but it is not excluded that the SPD 202 is a movable device.

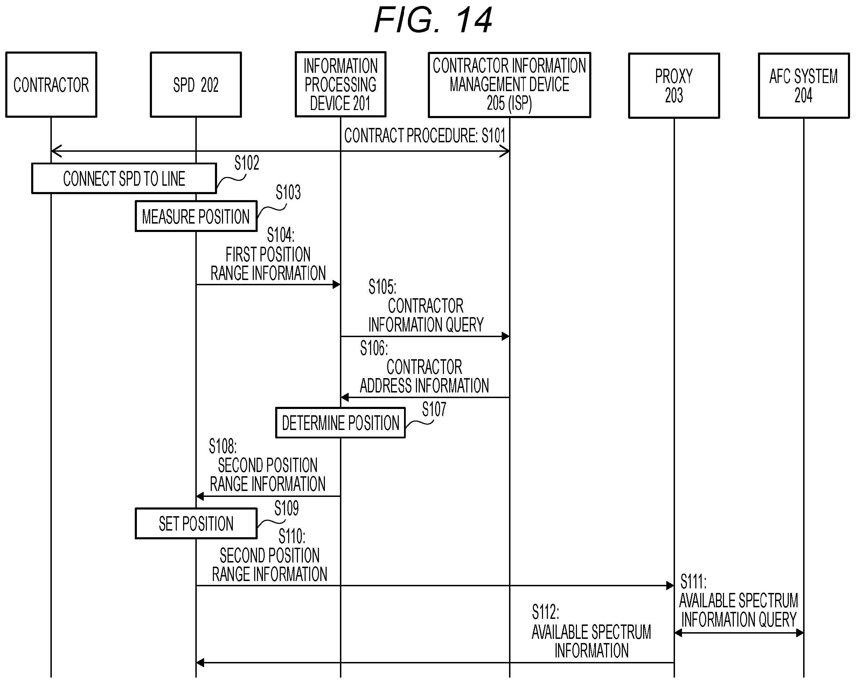

Fig. 14 illustrates an operation in which the SPD 202 connected to the line by the contractor acquires the secondary available spectrum information from the AFC system 204 as an operation example of the communication system according to the present embodiment. The secondary available spectrum information is generated by the AFC system 204 and includes one or more sets of spectra available by the SPD 202 and maximum allowable transmission power (transmit power). The line to which the SPD 202 is connected may be wired or wireless. The spectrum for which the SPD 202 acquires the secondary available spectrum information is, for example, a frequency channel used in a communication network such as a wireless LAN or a cellular mobile communication network. The line may be a communication medium different from the communication network, or may be a channel for initial connection in a cellular mobile communication network.

The contractor performs a contract procedure with the ISP, and the contractor information including the address information of the contractor and the like is registered in the contractor information management device 205 (S101). It is assumed that the contract with the ISP includes a contract for line use in addition to the contract for Internet connection. The contractor connects the SPD 202 to the line (S102). In a case where the line is wired, the contractor may connect the SPD 202 to the line via a modem. The SPD 202 connected to the line measures a position using a sensor such as an internal GPS sensor, determines a region (first position range) in which the SPD 202 can exist on the basis of the measured position and the range of uncertainty, and acquires information (first position range information) indicating the determined region (S103). The SPD 202 transmits a position information provision request including the first position range information and information capable of specifying the contractor to the information processing device 201 (S104).

The information processing device 201 transmits a contractor information query request for inquiring the address information of the contractor to the contractor information management device 205 on the basis of the information that can identify the contractor (S105). The information processing device 201 acquires the address information of the contractor as a response from the contractor information management device 205 (S106). The information that can identify the contractor may be, for example, a unique identification number issued at the time of contract with the ISP. The identification number may be recorded in the modem, and the information processing device 201 may acquire the identification number from the modem. This identification number may be recorded in the SIM card.

The information processing device 201 determines whether the SPD 202 is arranged in the building indicated by the address information of the contractor on the basis of the address information of the contractor, the map data, and the first position range information (S107). As a determination method, the above-described method can be used. In a case where the SPD 202 is determined to be arranged in a building, the information processing device 201 generates information (second position range information) indicating a building region (second position range) as a region where the SPD 202 can exist, and transmits the second position range information to the SPD 202 (S108). A service in which the information processing device 201 generates the second position range information in this manner and provides the SPD 202 (or the proxy 203) with the generated second position range information is referred to as a position information provisioning service. In a case where it is determined that the SPD 202 does not exist in the building, the information processing device 201 may transmit information indicating that the SPD 202 does not exist in the building indicated by the address information to the SPD 202 or the proxy 203.

The SPD 202 sets the second position range information as information of a region where the SPD 202 can exist. The SPD 202 may update the first position range information with the second position range information (S109). The SPD 202 transmits a proxy request including the second position range information together with the authentication ID and the device serial number to the proxy 203 (S110). The proxy request is a request for requesting the proxy 203 to obtain permission for the AFC system 204 to use the frequency with respect to the SPD 202.

The proxy 203 generates a request (available spectrum information query request) for querying an available spectrum of an SPC 202 on the basis of the proxy request, and transmits the available spectrum information query request to the AFC system 204 (S111). The available spectrum information query request includes, for example, an authentication ID of the SPD 202, a device serial number, and second position range information. The available spectrum information query request may include an identifier (identifier for identifying indoor and outdoor) indicating whether or not the SPD 202 is installed in a building.

The AFC system 204 determines whether the authentication ID and the device serial number of the SPD 202 are registered in advance in a storage device (for example, a database) inside or outside the AFC system 204. In a case where the authentication ID and the device serial number of the SPD 202 are registered, the spectrum and transmission power that can be used by the SPD 202 in the geographical range indicated by the second position range information are determined on the basis of the protection rule regarding the primary system (interference protection criterion such as I/N, radio wave propagation model, and the like). Whether or not the SPD 202 is present in the building may be determined on the basis of the second position range information and the map data, or in a case where the indoor/outdoor identifier described above is included in the request, the determination may be made using the identifier. In a case where a building exists in the region indicated by the second position range information, it is determined that the SPD 202 exists in the building. If a building in the geographical range indicated by the second position range information, it is determined that the SPD 202 is present in the building, and the spectrum and transmission power are determined.

As an example of determining the spectrum and transmission power, the spectrum and transmission power at which the amount of power interference to be applied to the primary system (for example, a marine radar) to be protected from radio wave interference is equal to or less than a threshold are determined. In a case where the SPD 202 is present in a building, the spectrum and transmission power can be determined in consideration of a building entry loss. That is, by applying the building entry loss, the spectrum and transmission power available for the SPD can be determined on the assumption that the radio wave radiated from the SPD has a power loss in the building. The AFC system 204 transmits the available spectrum information indicating the determined frequency and transmission power to the proxy 203 as a response to the available spectrum information query request (S111 of the same). In a case where the authentication ID and the device serial number of the SPD 202 are not registered, the AFC system 204 may determine that there is no available spectrum in the SPD 202, and transmit information notifying the fact to the SPD 202 via the proxy 203.

The proxy 203 transmits the available spectrum information received from the AFC system 204 to the SPD 202 as a response to the use permission proxy request (S112). The SPD 202 determines an available spectrum and transmission power on the basis of the available spectrum information, and starts transmission of a radio wave at the spectrum and transmission power.

By the processing illustrated in Fig. 14, for example, even in a case where the position measurement accuracy of the SPD 202 is low and the measurement position is outside the building where the SPD 202 is installed, or even in a case where the geographical range indicated by the first position range information of the SPD 202 includes a region outside the range of the building where the SPD 202 is installed, it is possible to reliably notify the AFC system 204 that the SPD 202 is installed in the building.

The procedure of the foregoing steps S103 to S109 may be implemented in a normally implemented authentication process such as PPPoE or IPoE, or may be additionally implemented as a separate process.

The processing illustrated in Fig. 14 is merely an example, and procedures other than the processing illustrated in Fig. 14 such as handshaking (connection procedure) between the SPD and the proxy may naturally occur.

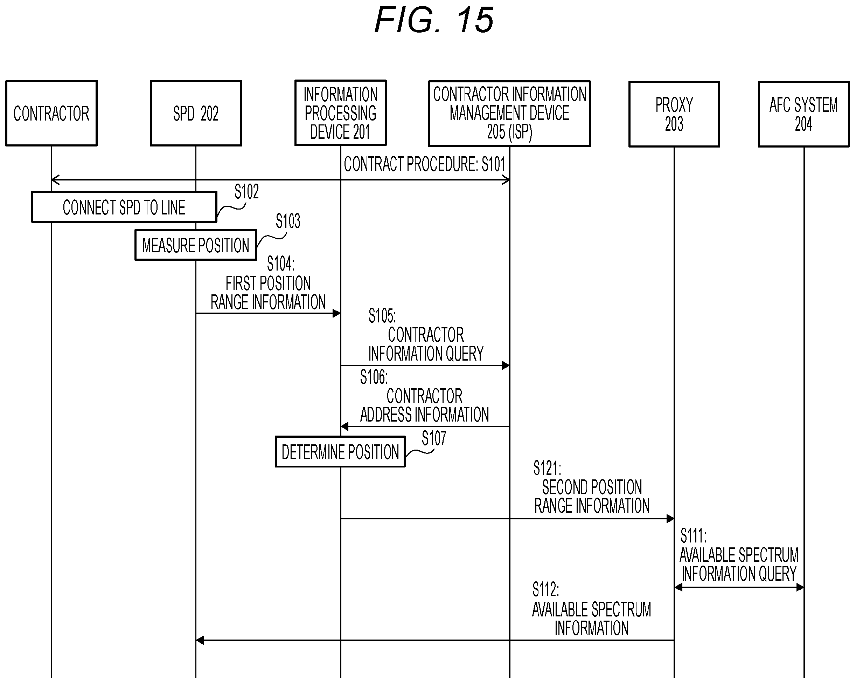

Fig. 15 illustrates another operation example of the communication system according to the present embodiment. In the operation example of Fig. 14, the information processing device 201 transmits the second position range information to the SPD 202, and the SPD 202 transmits the second position range information to the proxy 203. However, in the operation example of Fig. 15, the information processing device 201 directly transmits the second position range information to the proxy 203. A difference from the operation example in Fig. 14 will be mainly described, and the same or similar steps as those in Fig. 14 are denoted by the same reference numerals, and a detailed description thereof will be omitted.

In step S104, the information processing device 201 acquires the authentication ID and the device serial number of the SPD 202 from the SPD 202 together with the first position range information. Similarly to Fig. 14, the information processing device 201 generates information (second position range information) indicating the region of the building at the contractor's address in steps S105 to S107. The information processing device 201 transmits a proxy request including the second position range information together with the authentication ID and the device serial number of the SPD 202 to the proxy 203 (S121). The proxy request is a request for requesting the proxy to inquire the AFC system 204 about the available spectrum and transmission power for the SPD 202. The operation after the proxy 203 receives the proxy request is similar to that in Fig. 14.

In the operation examples of Figs. 14 and 15, the proxy 203 substitutes the SPD 202 for the access to the AFC system 204, but the SPD 202 may directly access the AFC system 204.

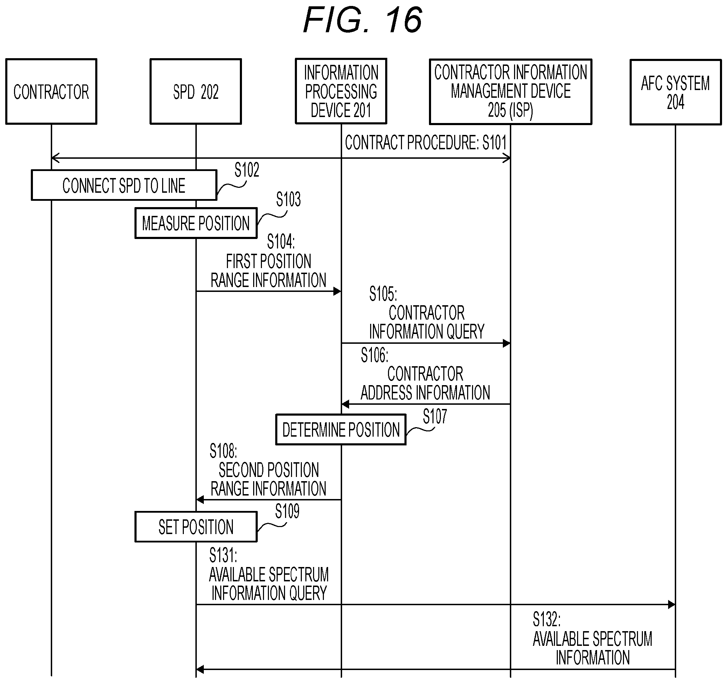

Fig. 16 illustrates an operation example in a case where the SPD 202 directly accesses the AFC system 204. A difference from the operation example in Fig. 14 will be mainly described, and the same or similar steps as those in Fig. 14 are denoted by the same reference numerals, and a detailed description thereof will be omitted.

After setting the second position range information in step S109, the SPD 202 transmits an available spectrum information query request including the authentication ID, the device serial number, and the second position range information of the SPD 202 to the AFC system 204 (S131).

The SPD 202 receives a response including available spectrum information indicating the available spectrum and transmission power from the AFC system 204 (S132). The SPD 202 determines an available spectrum and transmission power on the basis of the available spectrum information, and starts transmission of a radio wave at the spectrum and transmission power.

[Other operation examples]

In a case where the address of the contractor is changed due to moving of the contractor or the like, the information processing device 201 may temporarily stop the position information provisioning service until the SPD 202 accesses the information processing device 201 at the changed address. Furthermore, it is desirable to temporarily stop proxy access to the AFC system 204 by the proxy 203. However, even in a case where the address of the contractor changes, it is not necessary to suspend the position information provisioning service in a case where the change of the address does not cause a change of the building (a case where the entire building is an area of location uncertainty or a volume of location uncertainty), such as a change to another room in the same apartment building, or in a case where there is no change of the floor (a case where the floor is an area of location uncertainty or a volume of location uncertainty).

Furthermore, similarly, in a case where the information processing device 201 determines that the SPD is used at a place other than the contractor's address without changing the contractor's address (for example, the first position range information based on a position measured at the place by the SPD is notified from a place other than the contractor's address), the position information provisioning service may be temporarily stopped. Furthermore, it is desirable to temporarily stop proxy access to the AFC system 204 by the proxy 203. Alternatively, only the position information provisioning service in the information processing device 201 may be stopped, and the proxy 203 may perform proxy access to the AFC system 204 using the first position range information based on the measurement of the SPD itself.

However, in this case, even in a case where the SPD 202 is actually operated (installed) in a building, the SPD notifies information indicating that the SPD is operated outdoors (an identifier (for example, a Boolean parameter) indicating whether or not the user is indoors specifies outdoor). Typically, it is assumed that an operator of the AFC system 204 makes a service contract in advance with a network operator who operates the SPD 202 or the proxy 203. In this case, for example, when the ISP transmits the available spectrum information query request for the SPD 202 of the contractor to the AFC system 204 using the proxy 203, the contract information (corporate name, contract ID, contact information, and the like) with the operator of the AFC system 204 in the ISP itself may be transmitted together with the request. Thus, the AFC system 204 can determine that the available spectrum information query request is certainly transmitted from the contracted network operator by collating the contract information accompanying the request with the information of the contracted network operator held and managed by the AFC system 204. Therefore, it can be determined that the validity of the identifier indicating indoor and outdoor included in the request is valid.

Based on this determination, the AFC system 204 can determine whether or not to apply the building entry loss when determining the secondary available spectrum information. For example, in a case where the available spectrum information query request is certainly transmitted from the contracted network operator, and the identifier indicating indoor and outdoor included in the request indicates indoor, the AFC system 204 determines to apply the building entry loss. Otherwise, the AFC system 204 determines not to apply the building entry loss. In a case where the building entry loss is applied, since the spectrum and transmission power available for the SPD can be determined on the assumption that the radio wave radiated from the SPD has a power loss in the building, there can be more candidates for the available spectrum than in a case where the building entry loss is not applied, and the allowable transmission power can also be increased.

Furthermore, the AFC system 204 may acquire information indicating the type of the indoor installation guarantee method from the SPD or the proxy in addition to the identifier (for example, a Boolean parameter) indicating whether or not it is indoor. This is because different methods may be used by different operators to ensure indoor installation. In a case where the acquired information indicates that it is a method supported by the AFC system 204, the AFC system 204 may determine to apply the building entry loss.

For example, the information processing device of the present embodiment may be installed as a part of a premises termination (PT) installed in a main distribution frame (MDF) room or the like of each apartment building, or may be installed in connection with the PT.

(Modification 1)

In the embodiment described above, it is assumed that the SPD has a geolocation function, but a form of implementing the position information provisioning service for the SPD that does not have the geolocation function will be described. Normally, when an Internet subscription is made, a modem is sent to each house from an ISP or a line provider. The modem may have a geolocation function, the modem may perform position measurement instead of the connected SPD, and provide the SPD with measured position information or the first position range information based on a measurement position.

Furthermore, the information processing device 201 according to the present embodiment may be installed as a part of a premises termination (PT) installed in a main distribution frame (MDF) room or the like of each apartment building, or may be installed in connection with the PT. In this case, in the information processing device 201, the area of location uncertainty or the volume of location uncertainty applicable to all SPDs that can be installed in the apartment building is written to the information processing device 201 as the first position range information. Then, when connected from the SPD of each house, the information processing device 201 directly or indirectly provides the SPD with the area of location uncertainty or the volume of location uncertainty written in advance via a modem.

In the embodiment described above, in a case where the first position range (area of location uncertainty or the like) measured by the SPD largely deviates from the contractor's address or in a case where it can be predicted that the first position range largely deviates from the contractor's address, the method may be switched to the method described in the present Modification 1 to implement the position information provisioning service. The fact that the area of location uncertainty largely deviates from the contractor's address may be, for example, that the ratio between the size of the region in which the area of location uncertainty and the region occupied by the building of the address in the contract overlap and the size of the area of location uncertainty or the region of the building is less than the threshold. Alternatively, the position measured by the SPD (latitude, longitude) need not be included in the region of the building.

(Modification 2)

In the embodiment or Modification 1 described above, it is determined whether the position of the SPD is in a building (indoor). As an application of the above-described embodiment or Modification 1, for example, when the secondary use of the spectrum is permitted only in a limited place, the information processing device 201 may determine whether or not the SPD is in the limited place.

For example, there is a case where a country A and a country B are adjacent to each other, an SPD is installed near a border on the country A side, and operation of the SPD on the country A side is not allowed in the neighboring country B according to rules of the country. In such a case, if the area of location uncertainty of the SPD crosses a border, the AFC system may determine that there is no secondary available spectrum in the area of location uncertainty. The AFC system may be present in either country A or country B.

Accordingly, it is determined whether the SPD is installed in the country A by a method similar to the method described in the above-described embodiment or Modification 1. In a case where it can be determined that the SPD is installed in the country A, the area of location uncertainty processed by the information processing device can be determined as the second position range so as to be within the country A, and provides the second position range information to the AFC system. Thus, even in a case where the area of location uncertainty based on the position measured by the SPD extends across the border, the AFC system determines that the SPD can exist only in the country A, and allows the SPD to use the secondary use of the frequency.

(Second embodiment)

An operator who operates the AFC system is defined as an AFC system operator in the United States and an AFC system administrator in Canada, and the same company can acquire certification of the AFC system in each country and operate the AFC system.

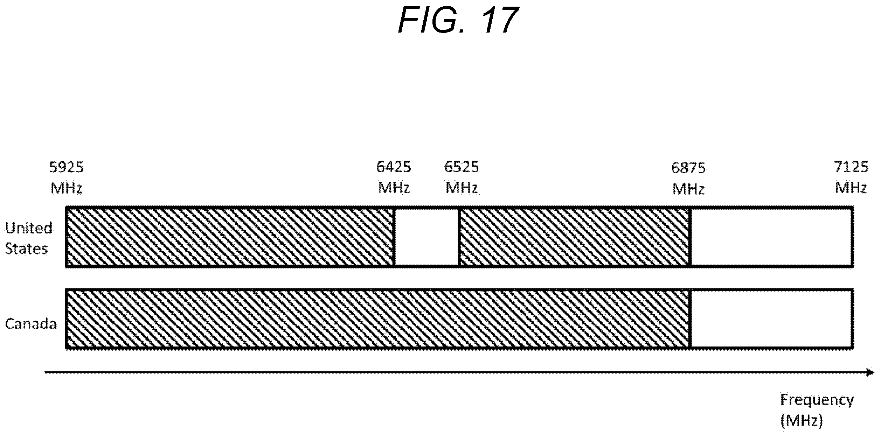

Fig. 17 illustrates target frequency bands of the AFC systems in the United States and Canada. The target frequency bands are different from each other.

A case where the AFC system is operated by the same company in two adjacent countries such as the United States and Canada can occur between other countries and can also occur between adjacent regions in the same country.

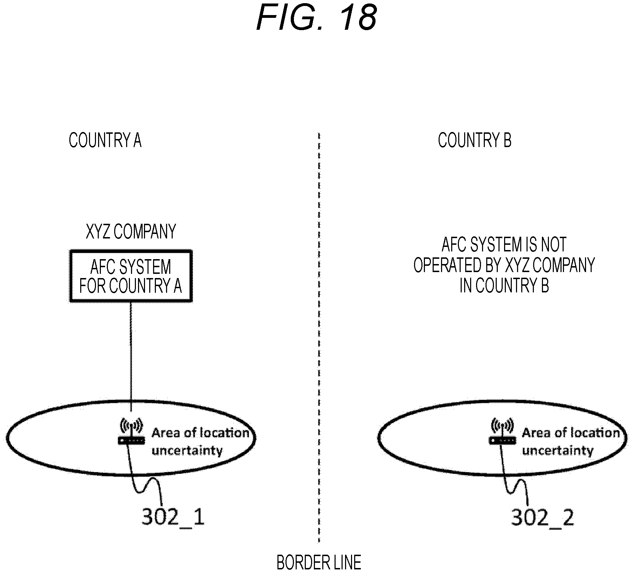

At this time, there may be three types of forms illustrated in Figs. 18 to 20 as operation forms of the AFC system of the same company. In Figs. 18 to 20, the same company is referred to as an "XYZ company".

Fig. 18 illustrates an example in which the XYZ company operates the AFC system only in the country A. A vertical broken line indicates a border between the country A and the country B.

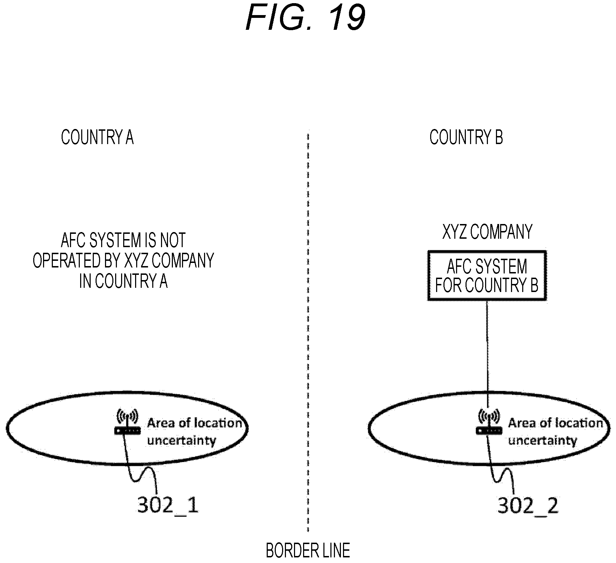

Fig. 19 illustrates an example in which the XYZ company operates the AFC system only in the country B.

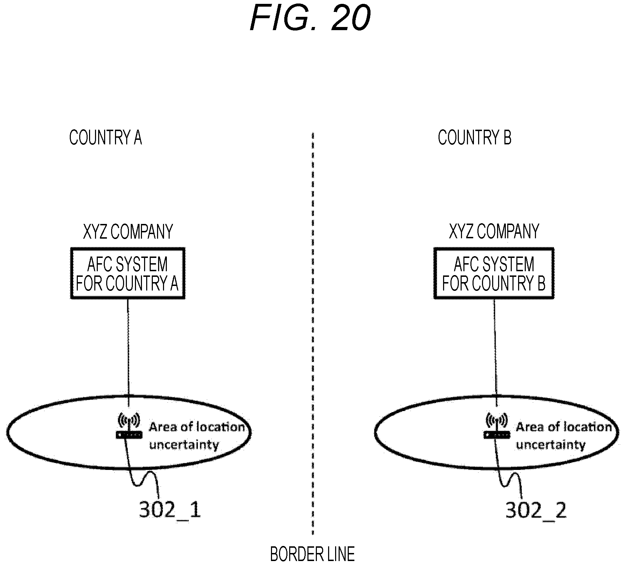

Fig. 20 illustrates an example in which the XYZ company operates the AFC system in both the country A and the country B.

In Figs. 18 to 20, SPD 302_1 and SPD 203_2 are arranged in the country A and the country B, respectively, and the first position range (here, area of location uncertainty) based on each measurement position is illustrated.

As illustrated in Figs. 18 to 20, there is no particular problem in a case where the area of location uncertainty of the SPD is within the region of each country. Since the AFC system is operated only in one country, the AFC system is only required to notify that there is no available spectrum of the SPD. On the other hand, depending on the measurement position of the SPD, there may be a case in which the area of location uncertainty extends across borders. In both countries, the AFC system can be operated, and no clear method has been disclosed so far as to how to handle the case where the area of location uncertainty crosses the border. In a case where there is a place where three or more countries or regions can be adjacent as in Europe, the coping method may be further complicated.

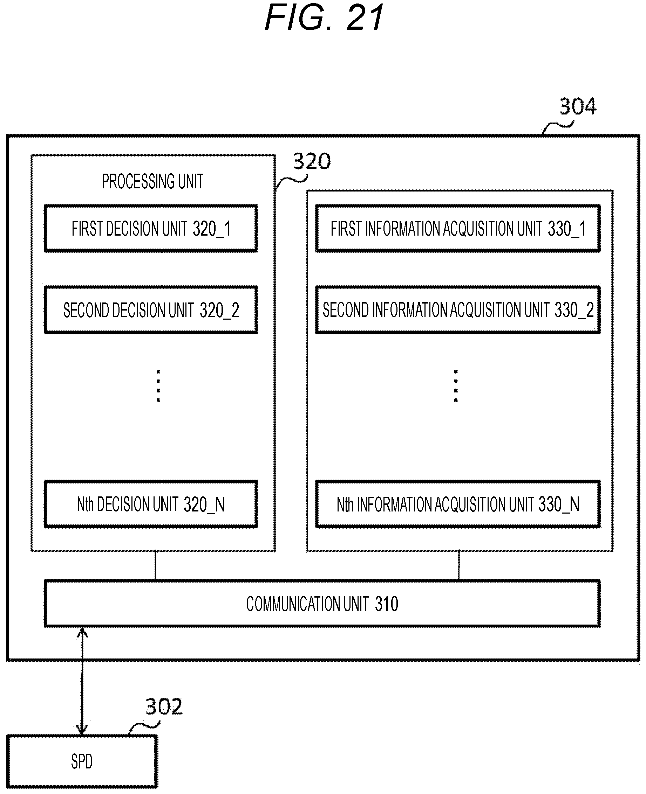

Fig. 21 is a block diagram of the AFC system 304 as an example of the information processing device according to the second embodiment. The AFC system 304 includes a communication unit 310, a processing unit 320, and a first information acquisition unit 330_1 to an Nth information acquisition unit 330_N. The processing unit 320 includes a first decision unit 320_1 to an Nth decision unit 320_N. The communication unit 310 includes a transmission unit that transmits data or information to each of the SPD 302 and a reception unit that receives data or information from each of the SPD.

The communication unit 310 receives an available spectrum query request for inquiring about an available spectrum from the SPD 302. The communication unit 310 transmits the available spectrum information to the SPD 302 as a response to the received request. The available spectrum information includes one or more sets of the frequency allowed to be used by the SPD 302 and the maximum transmission power allowed in the radio wave transmission of the frequency.

When an available spectrum query request is received by the communication unit 310, an X-th information acquisition unit (X is an integer of 1 or more and N or less) acquires information related to a primary system to be protected in a country corresponding to an index number X in a case where there are N neighboring countries. For example, the X-th information acquisition unit acquires information related to an external primary system in a country corresponding to the index number X from an information database for the primary system. The acquired information includes information such as a position (two-dimensional or three-dimensional) of the primary system and a use frequency, and may include information such as a transmission or reception beam pattern, maximum transmission power, antenna transmission power, and an operation period as other information. The information related to the primary system may be acquired in advance or periodically, not at the timing when the available spectrum query request is received.

The X-th decision unit determines a frequency and transmission power capable of protecting the primary system to be protected in the country corresponding to the index number X on the basis of the information acquired by the X-th information acquisition unit. The X-th decision unit generates available spectrum information (hereinafter, referred to as X-th available spectrum information) indicating the determined frequency and transmission power.

In the following description, a mode is assumed in which the number of adjacent countries is two, and one AFC system commonly installed for both of the two countries is operated (the AFC system is operated in one instance).

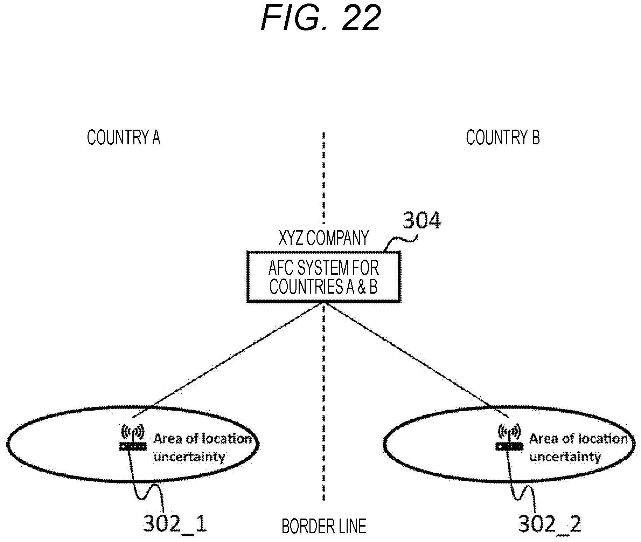

Fig. 22 schematically illustrates this operation mode. One AFC system is provided in common for the country A and the country B. As an actual hardware configuration of the AFC system, the AFC system may be configured by a plurality of pieces of hardware and distributed on the cloud between the country A and the country B, or all pieces of hardware constituting the AFC system may be arranged in one of the countries.

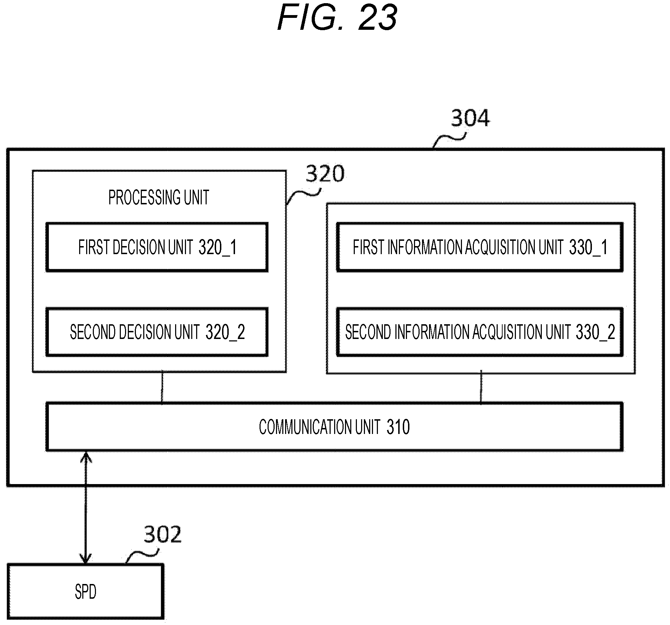

Fig. 23 illustrates a configuration example of the AFC system in a case where the operation mode of Fig. 22 is assumed. The configuration of Fig. 23 corresponds to a configuration in a case where N=2 in the block diagram of Fig. 21.

The first decision unit 320_1 and the first information acquisition unit 330_1 are for the country A, and the second decision unit 320_2 and the second information acquisition unit 330_2 are for the country B.

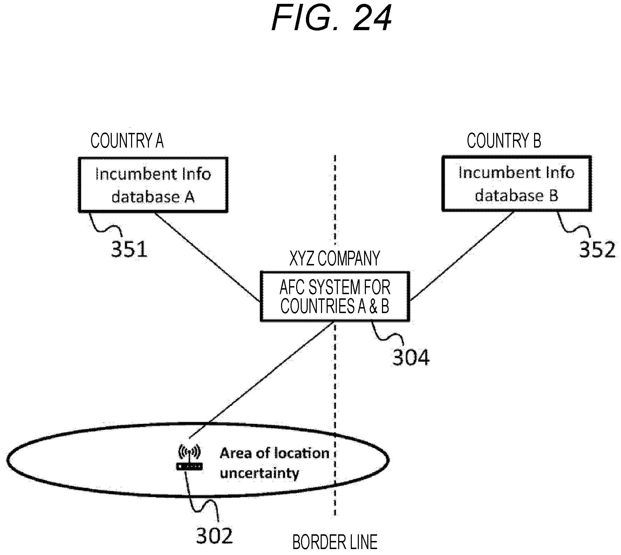

Fig. 24 illustrates an overall system configuration example in a case where the operation mode of Fig. 22 is assumed. The AFC system 304 of Fig. 24 has the configuration of Fig. 23. The AFC system 304 is connected in a wired or wireless manner to an information database 351 (incumbent info database A) for a primary system to be protected in the country A and an information database 351 (incumbent info database B) for a primary system to be protected in the country B. The SPD 302 is located near the border on the country A side, and a first position range (area of location uncertainty) based on the position measured by the SPD 302 extends over both areas of the country A and the country B.

In this example, for simplification of description, the area of location uncertainty in the two-dimensional direction is treated as the first position range, but volume of location uncertainty in consideration of the height direction can also be treated.

The processing unit 320 of the AFC system 304 determines the frequency and transmission power that can be used in the area of location uncertainty according to the authentication acquisition state of the SPD 302 in the country A and the country B.

In a case where the SPD 302 has only the authentication ID of either the country A or the country B, the processing unit 320 determines that there is no frequency that can be used in the area of location uncertainty. In a case where the SPD 302 has any authentication ID of the country A or the country B and the device serial number is registered in the AFC system 304, the processing unit 320 determines a frequency and transmission power that can be used in the area of location uncertainty. Hereinafter, the present disclosure will be described in more detail.

In a case where the SPD 302 has authentication IDs of both the country A and the country B, the first decision unit 320_1 determines a frequency and transmission power that can be used in the area of location uncertainty on the basis of a protection rule of the country A (an interference protection criterion such as I/N, a radio wave propagation model, or the like) related to the primary system of the country A within an AFC system target frequency band in the country A. Thus, the first available spectrum information including the spectrum and transmission power that can be used by the SPD 302 in the country A is generated.

Similarly, the second decision unit 320_2 determines a spectrum and transmission power that can be used in the area of location uncertainty in the AFC system target frequency band in the country B on the basis of the protection requirement of the country B related to the primary system of the country B (interference protection criteria such as I/N, a radio wave propagation model, and the like). Thus, the second available spectrum information including the spectrum and transmission power that can be used by the SPD 302 in the country B is generated.

However, the SPD rule (Maximum EIRP, Maximum PSD, Extra-Channel Radiation Definition, and the like) of the country A is applied to a region included in the country A in the area of location uncertainty, and the SPD rule (Maximum EIRP, Maximum PSD, Extra-Channel Radiation Definition, and the like) of the country B is applied to a region included in the country B in the area of location uncertainty.

The processing unit 320 of the AFC system 304 selects a frequency common to both on the basis of the first available spectrum information and the second available spectrum information, selects a lower transmission power of the transmission powers determined by both for the selected frequency, and generates available spectrum information including the selected spectrum and transmission power for the SPD 302. In this way, for the AFC system target frequency band common between the two countries, a frequency and transmission power that can protect the respective primary systems in the respective bands of the two countries are determined.

As illustrated in Fig. 17 described above, the 6425 to 6525 MHz band is not the AFC system target frequency band, but is a target band in Canada. The 5925 to 6425 MHz band or the 6525 to 6875 MHz band is an AFC system target frequency band common between two adjacent countries. In the 5925 to 6425 MHz band or the 6525 to 6875 MHz band, a frequency and transmission power capable of protecting the respective primary systems of both countries are determined. For the AFC system target frequency band that is not common between the two countries, it is determined that there is no secondary available spectrum for the SPD 302. In the example of Fig. 17, in the 6425 to 6525 MHz band and the 6825 to 7125 MHz band, it is determined that there is no secondary available spectrum in the area of location uncertainty for the SPD 302.

Although the configuration in which one common AFC system is arranged in two adjacent countries is illustrated in Figs. 23 and 24, there is a case where an AFC system certified in a country needs to be installed in this country (in the case of the cloud, it is synonymous with deploying the AFC system on a domestic data server) depending on the rules of the country. Therefore, in a case where one business operator wants to deploy the AFC system in each of two adjacent countries, it is necessary to deploy an independent AFC system in each of the countries.

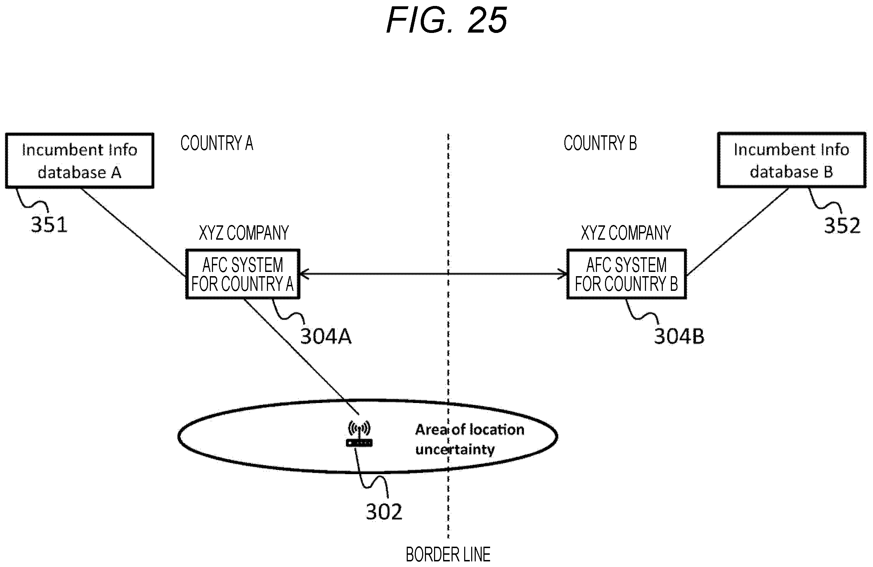

Fig. 25 illustrates an overall system configuration example in a case where respective independent AFC systems are arranged in two adjacent countries. A first AFC system 304A for the country A and a second AFC system 304B for the country B are arranged, and are operated by the same operator (XYZ company). The first AFC system 304A is connected to the information database 351 for the primary system of the country A in a wired or wireless manner, and the second AFC system 304B is connected to the information database 352 for the primary system of the country B in a wired or wireless manner. The SPD 302 is located near the border on the country A side, and the first position range (area of location uncertainty) determined on the basis of the position measured by the SPD 302 extends over both the regions of the country A and the country B.

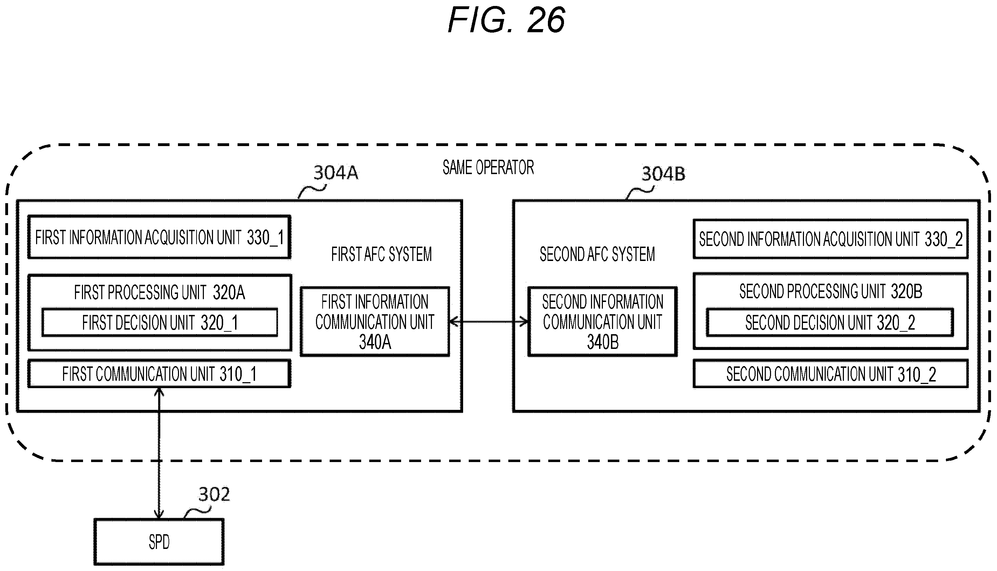

Fig. 26 is a block diagram of an example of the first AFC system 304A and the second AFC system 304B illustrated in Fig. 25.

The first AFC system 304A includes a first communication unit 310_1, a first processing unit 320A, a first information acquisition unit 330_1, and a first information communication unit 340A. The first processing unit 320A includes a first decision unit 320_1. The second AFC system 304B includes a second communication unit 310_2, a second processing unit 320B, a second information acquisition unit 330_2, and a second information communication unit 340B. The second processing unit 320B includes a second decision unit 320_2. The first information acquisition unit 330_1 and the second information acquisition unit 330_2 have functions similar to those of the first information acquisition unit 330_1 and the second information acquisition unit 330_2 in Fig. 23. The first decision unit 320_1 and the second decision unit 320_2 have functions similar to those of the first decision unit 320_1 and the second decision unit 320_2 in Fig. 23. The first communication unit 310_1 and the second communication unit 310_2 have functions similar to those of the communication unit 310 in Fig. 23.

The first communication unit 310_1 of the first AFC system 304A receives, from the SPD 302, an available spectrum information query request specifying a first position range (area of location uncertainty). The first decision unit 320_1 of the first processing unit 320A determines whether the SPD 302 has the authentication IDs of both of the country A (first country) and the country B (second country), and in a case where the SPD has both the authentication IDs, the first decision unit 320_1 divides the area of location uncertainty into a first area R1 and a second area R2 on the basis of the border line.

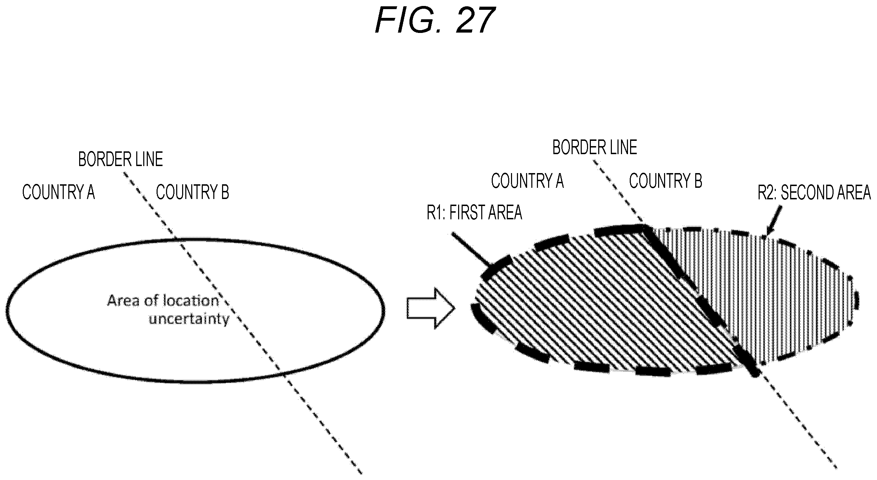

Fig. 27 illustrates an example in which the area of location uncertainty is divided into a first area R1 on the country A side and a second area R2 on the country B side on the basis of the border line.

The first decision unit 320_1 of the first AFC system 304A determines the available spectrum and the transmission power in the first area R1, and generates first available spectrum information. The first processing unit 320A transmits a request for generating second available spectrum information representing the available spectrum and transmission power in the second area R2 to the second AFC system 304B via the first information communication unit 340A.

The second information communication unit 340B of the second AFC system 304B receives the generation request from the first AFC system 304A. The second decision unit 320_2 of the second processing unit 320B determines the available spectrum and the transmission power in the second area R2 on the basis of the generation request, and generates the second available spectrum information. The second processing unit 320B transmits the second available spectrum information to the first AFC system 304A via the second information communication unit 340B. Note that the second communication unit 310_2 is a communication unit that communicates with the SPD in the country B, and has a function similar to that of the first communication unit 310_1 of the first AFC system 304A that communicates with the SPD in the country A.

The first processing unit 320A of the first AFC system 304A generates the third available spectrum information based on the first available spectrum information and the second available spectrum information. The third available spectrum information is typically generated by extracting a common element of the first available spectrum information and the second available spectrum information. For example, it is assumed that frequencies (channels) #1 to #5 are available in the first available spectrum information, and frequencies (channels) #4 to #10 are available in the second available spectrum information. In this case, the frequencies #4 and #5, which are these common elements, are selected. Further, for each selected frequency, a smaller one of the transmission powers allowed by the first available spectrum information and the second available spectrum information is selected. The third available spectrum information including the selected frequencies #4 and #5 and the respective transmission power.

The first processing unit 320A of the first AFC system 304A transmits the generated third available spectrum information to the SPD 302 via the first communication unit 310_1.

From the perspective of the second AFC system 304B, the first AFC system 304A looks like a proxy that interacts with the second AFC system 304B on behalf of one or more SPDs 302. In practice, the first AFC system 304A may send a generation request for the second available spectrum information to the second AFC system 304B in the same format as the available spectrum information query request that the SPD 302 or the proxy sends to the first AFC system 304A. That is, this is equivalent to that the SPD 302 transmits the available spectrum information query request to the second AFC system 304B using the second area R2 as the first position range (area of location uncertainty).

As a matter of course, in a case where an available spectrum information query request specifying an area of location uncertainty across the border is received from the SPD 302 even though the SPD 302 does not have the authentication ID in the country B, the first processing unit 320A of the first AFC system 304A desirably transmits a response indicating that there is no available spectrum in the area of location uncertainty to the SPD 302.

In Figs. 25 and 26, an example is illustrated in which the first AFC system 304A and the second AFC system 304B are operated by the same business operator, but as a matter of course, the first AFC system 304A and the second AFC system 304B can be operated by different business operators.

Note that the embodiment described above represents an example for embodying the present disclosure, and the present disclosure can be implemented in various other modes. For example, various modifications, substitutions, omissions, or combinations thereof are possible without departing from the gist of the present disclosure. Such modifications, substitutions, omissions, and the like are also included in the scope of the present disclosure, and are similarly included in the inventions disclosed in the claims and the equivalents thereof.

Furthermore, the effects of the present disclosure described in the present specification are merely an example, and other effects may be achieved.

Note that the present disclosure can also have the following configurations.

[Item 1]

A processing unit that determines whether or not a communication device exists in a first region on the basis of first information related to a position of the communication device, and generates second information that specifies the first region as a region where it is possible that the communication device exists in a case where it is determined that the communication device exists in the first region; and

a communication unit that transmits the second information to the communication device or a proxy that is communicable with a control system that allocates a spectrum available to the communication device on the basis of the region where it is possible that the communication device exists.

[Item 2]

The information processing device according to item 1, in which
the first region is a region of a building existing in a place indicated by address information of a contractor of the communication device.

[Item 3]

The information processing device according to item 2, in which
the processing unit specifies the region of the building existing in the place indicated by the address information on the basis of map data.

[Item 4]

The information processing device according to item 3, in which
the processing unit acquires address information of the contractor from contractor information of an Internet service provider that contracts with the contractor.

[Item 5]

The information processing device according to item 3 or 4, in which

the first information represents a first position range based on the position of the communication device and a range of uncertainty of the position, and
the processing unit determines whether or not the communication device exists in the building on the basis of a relationship between the first position range and the region of the building, and generates the second information in a case where it is determined that the communication device exists in the building.

[Item 6]

The information processing device according to item 5, in which
the processing unit determines whether or not the communication device is present in the building on the basis of a size in which the first position range overlaps with a region of the building.

[Item 7]

The information processing device according to any one of items 3 to 6, in which

the first information includes the position of the communication device, and

the processing unit determines whether or not the communication device exists in the building on the basis of whether or not the position indicated by the first information is included in the region of the building, and generates the second information in a case where it is determined that the communication device exists in the building.

[Item 8]

The information processing device according to any one of items 3 to 6, in which

the processing unit specifies the region of the building on the basis of an outer peripheral line of the building.

[Item 9]

The information processing device according to any one of items 5 to 8, in which

the position of the communication device is a position measured by a sensor of the communication device.

[Item 10]

The information processing device according to item 9, in which

the communication unit receives the first information from the communication device.

[Item 11]

The information processing device according to any one of items 5 to 10, in which

the position of the communication device is a position measured by a modem connected to the communication device, and

the communication unit receives the first information from the modem.

[Item 12]

The information processing device according to any one of items 1 to 11, in which

the first region is a region in a first country among a plurality of mutually adjacent countries.

[Item 13]

The information processing device according to any one of Items 1 to 12, in which

in a case where it is determined that the communication device does not exist in the first region, the communication unit transmits information indicating that the communication device does not exist in the first region to the communication device or the proxy.

[Item 14]

An information processing method including:

determining whether or not a communication device exists in a first region on the basis of first information related to a position of the communication device, and generating second information that specifies the first region as a region where it is possible that the communication device exists in a case where it is determined that the communication device exists in the first region; and

transmitting the second information to the communication device or a proxy that is communicable with a control system that allocates a spectrum available to the communication device on the basis of the region where it is possible that the communication device exists.

[Item 15]

An information processing device including:

a processing unit that specifies a region in which it is possible that a communication device exists on the basis of first information related to a position of the communication device, divides the specified region for each of a plurality of countries on the basis of a border line between the plurality of countries in a case where the specified region overlaps regions of the plurality of countries, determines a spectrum available to the communication device for each of divided regions, and selects a spectrum to be allocated to the communication device from the spectra determined in common to the plurality of divided regions; and

a communication unit that transmits available spectrum information indicating the selected spectrum to the communication device or a proxy.

[Item 16]

The information processing device according to item 15, in which

the information processing device allocates a spectrum in a first country among the plurality of countries,
a first region among the divided regions belongs to the first country,
the communication unit transmits a request for inquiring about a spectrum available to the communication device to a first device that allocates the spectrum in a country to which a region other than the first region belongs among the divided regions, the request includes information specifying the divided regions belonging to the country,
the communication unit receives information indicating the spectrum allocated by the first device, and
the processing unit determines a spectrum available to the communication device for each of the divided regions on the basis of the information received by the communication unit.

[Item 17]

An information processing method including:

specifying a region in which it is possible that a communication device exists on the basis of first information related to a position of the communication device, dividing the specified region for each of a plurality of countries on the basis of a border line between the plurality of countries in a case where the specified region overlaps regions of the plurality of countries, determining a spectrum available to the communication device for each of divided regions, and selecting a spectrum to be allocated to the communication device from the spectra determined in common to the plurality of divided regions; and

a communication unit that transmits available spectrum information indicating the selected spectrum to the communication device or a proxy.

REFERENCE SIGNS LIST

110, 110A, 110B, 110C Communication device
120 Terminal
130, 130A, 130B Communication control device
201 Information processing device
202 Communication device (SPD)
203 Proxy
204 AFC system
205 Contractor information management device
210 Communication unit
220 Processing unit
221 Determination unit
230 Contractor information acquisition unit
304 AFC system (information processing device)
304A First AFC system (information processing device)
304B Second AFC system (information processing device)
310 Communication unit
310_1 First communication unit
310_2 Second communication unit
320 Processing unit
320_1 First decision unit
320_2 Second decision unit

320_N Decision unit
320A Processing unit
320B Processing unit
330_1 First information acquisition unit
330_2 Second information acquisition unit
330_N Information acquisition unit
340A First information communication unit
340B Second information communication unit
351 (Database information
352 (Database information

**Claims**

1. An information processing device comprising:

   a processing unit that determines whether or not a communication device exists in a first region on a basis of first information related to a position of the communication device, and generates second information that specifies the first region as a region where it is possible that the communication device exists in a case where it is determined that the communication device exists in the first region; and
   a communication unit that transmits the second information to the communication device or a proxy that is communicable with a control system that allocates a spectrum available to the communication device on a basis of the region where it is possible that the communication device exists.

2. The information processing device according to claim 1, wherein
   the first region is a region of a building existing in a place indicated by address information of a contractor of the communication device.

3. The information processing device according to claim 2, wherein
   the processing unit specifies the region of the building existing in the place indicated by the address information on a basis of map data.

4. The information processing device according to claim 3, wherein
   the processing unit acquires address information of the contractor from contractor information of an Internet service provider that contracts with the contractor.

5. The information processing device according to claim 3, wherein

   the first information represents a first position range based on the position of the communication device and a range of uncertainty of the position, and
   the processing unit determines whether or not the communication device exists in the building on a basis of a relationship between the first position range and the region of the building, and generates the second information in a case where it is determined that the communication device exists in the building.

6. The information processing device according to claim 5, wherein
   the processing unit determines whether or not the communication device is present in the building on a basis of a size in which the first position range overlaps with a region of the building.

7. The information processing device according to claim 3, wherein

   the first information includes the position of the communication device, and
   the processing unit determines whether or not the communication device exists in the building on a basis of whether or not the position indicated by the first information is included in the region of the building, and generates the second information in a case where it is determined that the communication device exists in the building.

8. The information processing device according to claim 3, wherein
   the processing unit specifies the region of the building on a basis of an outer peripheral line of the building.

9. The information processing device according to claim 5, wherein
the position of the communication device is a position measured by a sensor of the communication device.

10. The information processing device according to claim 9, wherein
the communication unit receives the first information from the communication device.

11. The information processing device according to claim 5, wherein

the position of the communication device is a position measured by a modem connected to the communication device, and
the communication unit receives the first information from the modem.

12. The information processing device according to claim 1, wherein
the first region is a region in a first country among a plurality of mutually adjacent countries.

13. The information processing device according to claim 1, wherein
in a case where it is determined that the communication device does not exist in the first region, the communication unit transmits information indicating that the communication device does not exist in the first region to the communication device or the proxy.

14. An information processing method comprising:

determining whether or not a communication device exists in a first region on a basis of first information related to a position of the communication device, and generating second information that specifies the first region as a region where it is possible that the communication device exists in a case where it is determined that the communication device exists in the first region; and
transmitting the second information to the communication device or a proxy that is communicable with a control system that allocates a spectrum available to the communication device on a basis of the region where it is possible that the communication device exists.

15. An information processing device comprising:

a processing unit that specifies a region in which it is possible that a communication device exists on a basis of first information related to a position of the communication device, divides the specified region for each of a plurality of countries on a basis of a border line between the plurality of countries in a case where the specified region overlaps regions of the plurality of countries, determines a spectrum available to the communication device for each of divided regions, and selects a spectrum to be allocated to the communication device from the spectra determined in common to the plurality of divided regions; and
a communication unit that transmits available spectrum information indicating the selected spectrum to the communication device or a proxy.

16. The information processing device according to claim 15, wherein

the information processing device allocates a spectrum in a first country among the plurality of countries,
a first region among the divided regions belongs to the first country,
the communication unit transmits a request for inquiring about a spectrum available to the communication device to a first device that allocates the spectrum in a country to which a region other than the first region belongs among the divided regions, the request includes information specifying the divided regions belonging to the country,
the communication unit receives information indicating the spectrum allocated by the first device, and
the processing unit determines a spectrum available to the communication device for each of the divided regions on a basis of the information received by the communication unit.

17. An information processing method comprising:

specifying a region in which it is possible that a communication device exists on a basis of first information related to a position of the communication device, dividing the specified region for each of a plurality of countries on a basis of a border line between the plurality of countries in a case where the specified region overlaps regions of the plurality of countries, determining a spectrum available to the communication device for each of divided regions, and selecting a spectrum to be allocated to the communication device from the spectra determined in common to the plurality of divided regions; and

a communication unit that transmits available spectrum information indicating the selected spectrum to the communication device or a proxy.

FIG. 1

# FIG. 2

## FIG. 3

130A

130B

130B

# FIG. 4

# FIG. 5

INCUMBENT TIER
Incumbent Tier

PRIORITY ACCESS TIER
Priority Access Tier

GENERAL AUTHORIZED ACCESS (GAA) TIER
General Authorized Access(GAA) Tier

## FIG. 6

T101 CALCULATE COMMUNICATION PARAMETER TO BE USED BY COMMUNICATION DEVICE OF SECONDARY SYSTEM

T102 NOTIFY COMMUNICATION DEVICE OF SECONDARY SYSTEM OF OMMUNICATION PARAMETER

T103 ACQUIRE COMMUNICATION PARAMETER TO BE USED BY COMMUNICATION DEVICE (BASE STATION AND TERMINAL) TO BE USED BY SECONDARY SYSTEM

T104 SET COMMUNICATION PARAMETER TO BE USED BY COMMUNICATION DEVICE (BASE STATION) ITSELF

T105 NOTIFY OF COMMUNICATION PARAMETER TO BE USED BY TERMINAL SUBORDINATE TO COMMUNICATION DEVICE (BASE STATION) ITSELF

T106 ACQUIRE COMMUNICATION PARAMETER TO BE USED BY COMMUNICATION DEVICE (TERMINAL) OF SECONDARY SYSTEM

T106 ACQUIRE COMMUNICATION PARAMETER TO BE USED BY COMMUNICATION DEVICE (TERMINAL) OF SECONDARY SYSTEM

T107 SET COMMUNICATION PARAMETER TO BE USED BY COMMUNICATION DEVICE (TERMINAL) ITSELF

T107 SET COMMUNICATION PARAMETER TO BE USED BY COMMUNICATION DEVICE (TERMINAL) ITSELF

T108 PERFORM COMMUNICATION WITH ANOTHER COMMUNICATION DEVICE (TERMINAL) OF SECONDARY SYSTEM

T108 PERFORM COMMUNICATION WITH ANOTHER COMMUNICATION DEVICE (TERMINAL) OF SECONDARY SYSTEM

120    120    110

EP 4 622 373 A1

# FIG. 7

*FIG. 8*

204 AFC SYSTEM

203 PROXY

201 INFORMATION PROCESSING DEVICE

205 CONTRACTOR INFORMATION MANAGEMENT DEVICE

202 COMMUNICATION DEVICE (SPD)

AFC SYSTEM SIDE | ISP SIDE

ISP SIDE | CONTRACTOR SIDE

# FIG. 9

201

220

PROCESSING UNIT

DETERMINATION UNIT 221

CONTRACTOR INFORMATION ACQUISITION UNIT 230

COMMUNICATION UNIT 210

202

SPD

# FIG. 10

# FIG. 11

# FIG. 12

# FIG. 13

FIG. 14

FIG. 15

# FIG. 16

CONTRACTOR | SPD 202 | INFORMATION PROCESSING DEVICE 201 | CONTRACTOR INFORMATION MANAGEMENT DEVICE 205 (ISP) | AFC SYSTEM 204

CONTRACT PROCEDURE: S101

S102
CONNECT SPD TO LINE

S103
MEASURE POSITION

S104:
FIRST POSITION
RANGE INFORMATION

S105:
CONTRACTOR
INFORMATION QUERY

S106:
CONTRACTOR
ADDRESS INFORMATION

DETERMINE POSITION  S107

S108:
SECOND POSITION
RANGE INFORMATION

SET POSITION  S109

S131:
AVAILABLE SPECTRUM
INFORMATION QUERY

S132:
AVAILABLE SPECTRUM
INFORMATION

EP 4 622 373 A1

# FIG. 17

# FIG. 18

COUNTRY A

COUNTRY B

XYZ COMPANY

AFC SYSTEM IS NOT
OPERATED BY XYZ COMPANY
IN COUNTRY B

AFC SYSTEM
FOR COUNTRY A

Area of location
uncertainty

Area of location
uncertainty

302_1

302_2

BORDER LINE

# FIG. 19

COUNTRY A

COUNTRY B

AFC SYSTEM IS NOT
OPERATED BY XYZ COMPANY
IN COUNTRY A

XYZ COMPANY

AFC SYSTEM
FOR COUNTRY B

Area of location
uncertainty

302_1

Area of location
uncertainty

302_2

BORDER LINE

# FIG. 20

COUNTRY A

COUNTRY B

XYZ COMPANY

| AFC SYSTEM FOR COUNTRY A |
|---|

XYZ COMPANY

| AFC SYSTEM FOR COUNTRY B |
|---|

Area of location uncertainty

302_1

Area of location uncertainty

302_2

BORDER LINE

## FIG. 21

# FIG. 22

COUNTRY A

COUNTRY B

XYZ COMPANY

304

AFC SYSTEM FOR
COUNTRIES A & B

Area of location
uncertainty

Area of location
uncertainty

302_1

BORDER LINE

302_2

# FIG. 23

304

PROCESSING UNIT 320

FIRST DECISION UNIT 320_1

SECOND DECISION UNIT 320_2

FIRST INFORMATION ACQUISITION UNIT 330_1

SECOND INFORMATION ACQUISITION UNIT 330_2

COMMUNICATION UNIT 310

302

SPD

# FIG. 24

COUNTRY A

Incumbent Info
database A

351

XYZ COMPANY

AFC SYSTEM FOR
COUNTRIES A & B

304

COUNTRY B

Incumbent Info
database B

352

Area of location
uncertainty

302

BORDER LINE

## FIG. 25

COUNTRY A | COUNTRY B

Incumbent Info database A — 351

Incumbent Info database B — 352

XYZ COMPANY
AFC SYSTEM FOR COUNTRY A — 304A

XYZ COMPANY
AFC SYSTEM FOR COUNTRY B — 304B

Area of location uncertainty — 302

BORDER LINE

EP 4 622 373 A1

## FIG. 26

EP 4 622 373 A1

## FIG. 27

BORDER LINE

COUNTRY A    COUNTRY B

Area of location
uncertainty

BORDER LINE

COUNTRY A    COUNTRY B    R2: SECOND AREA

R1: FIRST AREA

## EP 4 622 373 A1

### INTERNATIONAL SEARCH REPORT

| International application No. |
|---|
| **PCT/JP2023/031719** |

#### A. CLASSIFICATION OF SUBJECT MATTER

*H04W 72/0453*(2023.01)i; *H04W 4/021*(2018.01)i; *H04W 4/029*(2018.01)i; *H04W 4/30*(2018.01)i; *H04W 16/14*(2009.01)i; *H04W 64/00*(2009.01)i

FI: H04W72/0453; H04W4/021; H04W4/029; H04W4/30; H04W16/14; H04W64/00 173

According to International Patent Classification (IPC) or to both national classification and IPC

#### B. FIELDS SEARCHED

Minimum documentation searched (classification system followed by classification symbols)

H04W4/00-H04W99/00 H04B7/24-H04B7/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

3GPP TSG RAN WG1-4, SA WG1-4, CT WG1,4

#### C. DOCUMENTS CONSIDERED TO BE RELEVANT

| Category* | Citation of document, with indication, where appropriate, of the relevant passages | Relevant to claim No. |
|---|---|---|
| A | JP 2014-519731 A (MICROSOFT CORP.) 14 August 2014 (2014-08-14) paragraphs [0045]-[0050], [0060]-[0066], fig. 3, 5 | 1-17 |
| A | JP 2022-43213 A (SONY CORP.) 15 March 2022 (2022-03-15) paragraphs [0090]-[0097], fig. 13 | 1-17 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 October 2023** | **17 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

68

## INTERNATIONAL SEARCH REPORT
### Information on patent family members

International application No.

**PCT/JP2023/031719**

| Patent document cited in search report | | | Publication date (day/month/year) | Patent family member(s) | | | Publication date (day/month/year) |
|---|---|---|---|---|---|---|---|
| JP | 2014-519731 | A | 14 August 2014 | US | 2014/0051467 | A1 | |
| | | | | paragraphs [0050]-[0060], [0070]-[0076], fig. 3, 5 | | | |
| | | | | WO | 2012/149679 | A1 | |
| | | | | CN | 103503375 | A | |
| | | | | KR | 10-2014-0025435 | A | |
| JP | 2022-43213 | A | 15 March 2022 | US | 2020/0245325 | A1 | |
| | | | | paragraphs [0108]-[0115], fig. 13 | | | |
| | | | | WO | 2018/020799 | A1 | |
| | | | | CN | 109565683 | A | |
| | | | | EP | 3493575 | A1 | |

Form PCT/ISA/210 (patent family annex) (January 2015)

# EP 4 622 373 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Spectrum Leasing. Electronic Code of Federal Regulations
- *WINNF-TS-0061-V1.5.1 Test and Certification for Citizens Broadband Radio Service (CBRS); Conformance and Performance Test Technical Specification; SAS as Unit Under Test (UUT)*, https://cbrs.wirelessinnovation.org/release-1-of-the-baseline-standard-specifications
- *WINNF-TS-0016-V1.2.4 Signaling Protocols and Procedures for Citizens Broadband Radio Service (CBRS): Spectrum Access System (SAS) - Citizens Broadband Radio Service Device (CBSD) Interface Technical Specification*, https://cbrs.wirelessinnovation.org/release-1-of-the-baseline-standard-specifications
- *940660 D02 CBSD Handshake Procedures*, https://apps.fcc.gov/kdb/GetAttachment.html?id=RQe7oZJVSW t0fCcNiBV%2Bfw%3D%3D&desc=940660%20D02%20CPE-CBSD%20Handshake%20Procedures%20v02&tracking_-number=22929 7

- *47 CFR Part 15 Subpart E Unlicensed National Information Infrastructure Devices*, https://www.ecfr.gov/current/title-47/chapter-I/subchapter-A/part-15/subpart-E
- *Decision on the Technical and Policy Framework for Licence-Exempt Use in the 6 GHz Band*, https://www.ic.gc.ca/eic/site/smt-gst.nsf/eng/sf11698.html
- *Wi-Fi EasyMesh*, https://www.wi-fi.org/discover-wi-fi/wi-fi-easymesh
- *Wi-Fi Alliance AFC Specification and Test Plans*, https://www.wi-fi.org/downloads-registered-guest/-AFC_Specifications_and_Test_Plans_072022.zip/38132
- *Wireless Innovation Forum Specifications, Reports and Recommendations*, https://6ghz.wirelessinnovation.org/specifications-reports-and-recommendations
- *WINNF-TS-3005-V1.1.0 Signaling Protocols and Procedures for 6 GHz Band; Extensions to AFC System - Standard Power Device Interface Technical Specification*, https://6ghz.wirelessinnovation.org/-specifications-reports-and-recommendations